# EUROPEAN PATENT SPECIFICATION

(11) **EP 3 494 152 B1**
(45) Date of publication and mention of the grant of the patent: **27.04.2022**
(21) Application number: 17743350.5
(22) Date of filing: 27.07.2017
(51) Int. Cl.: C08G 12/40, C04B 24/26, C08J 3/00, C09D 5/02, C08G 59/22, C08G 59/50, C08K 3/00, C08L 1/00, C08L 61/02, C08L 63/00

(54) **POLYMER BLENDS FOR EPOXY RESINS COMPOSITIONS**
POLYMERMISCHUNGEN FÜR EPOXIDHARZZUSAMMENSETZUNGEN
MÉLANGES POLYMÈRES POUR COMPOSITIONS DE RÉSINES ÉPOXY

(30) Priority: 03.08.2016 EP 16182659
(43) Date of publication of application: 12.06.2019
(73) Proprietor: Sika Technology AG, 6340 Baar (CH)
(72) Inventor: GALLEGOS, Pedro, Coquimbo (CL); VALDEBENITO, Carolina, Santiago (CL); OLIVARES, Hugo, Santiago (CL)
(74) Representative: Sika Patent Attorneys
(86) International application number: PCT/EP2017/069009
(87) International publication number: WO 2018/024599

(56) References cited:
- EP-A1- 2 524 903
- WO-A1-2011/029711
- WO-A1-2013/020862
- US-A1- 2004 211 342
- US-A1- 2015 284 563
- US-B2- 9 145 335

## Description

### Technical field

The invention relates to a curable epoxy resin composition comprising at least one epoxy resin, at least one inorganic filler and at least one dispersant. Further aspects of the invention are related to a method for producing a curable epoxy resin composition and to a use of a dispersant as dispersing agent for inorganic fillers in curable epoxy resin compositions.

### Background art

Epoxy resins are used for a variety of applications, for example as adhesives, coatings, sealants or molding compositions for producing moldings. During processing, inorganic fillers are often added to epoxy resins in order to influence the properties of the curable resins or cured plastic materials. Inorganic fillers, for example, improve the strength of epoxy resins or the adhesion of the resins to substrates. Inorganic fillers in epoxy resins also fulfill many other functions such as being flame retardants, insulators, viscosity modifiers or dyes (as pigments). Another purpose is to save expensive epoxy resin, resulting in cost savings.

The fillers are incorporated prior to curing in the still liquid or pasty epoxy resin and distributed as evenly as possible. However, larger amounts of fillers often cannot readily be incorporated homogeneously into the compositions. The filler uptake capacity of epoxy resins is limited, as the fillers markedly decrease the flowability of the epoxy resin composition and hence the workability. Another problem is the insufficient compatibility of the inorganic fillers with the organic resins, which can lead to inadequate wetting. This may result in formation of agglomerates of fillers and inhomogeneities, which reduce the stability and the flowability of the products.

In the prior art the problem of insufficient compatibility is solved by additives which improve the wettability of the inorganic fillers. For example, wetting agents, which are often low molecular weight surfactants, are added in the prior art. They reduce the surface tension at the interface and thus promote the wetting of the filler surfaces. Typical wetting agents are, for example, long chain fatty acids such as sodium stearate. However, because of the small chain lengths of such surfactants their dispersing action is low. Another disadvantage is that epoxy compositions having surfactants tend to foam and reduce strength of cured compositions.

To solve the problem, coated fillers are also used in the prior art. Here, the surface of the inorganic fillers, for example those made of silica, is modified by silanization with organosilanes. Depending on which silanization agent is used, the surface, for example, is provided with hydroxy or ether groups. Suitable silanization agents are commercially available and are sold for example by Evonik, DE, under the brand name Dynasilan. However, surface coatings by silanization are relatively complex. For time and cost reasons the method is therefore hardly suitable for users who need to customize a filler with as little effort as possible for a special epoxy resin.

A further class of additives to improve the compatibility of inorganic fillers with curable polymer compositions is that of dispersing agents based on hydrophilic polymers. EP 0 417 490 A2 (Byk-Chemie GmbH) and EP 1 723 155 B1 (BASF SE) disclose dispersing agents based on phosphoric acid esters with long-chain polyester components. They do not always have adequate dispersing properties for specific curable polymer compositions and are also relatively expensive.

Furthermore, polycarboxylate ethers have been used as dispersing agents for improving compatibility of inorganic fillers with curable epoxy resin compositions. WO 2014/072200 A1 (Sika Technology AG) describes for example a curable epoxy resin composition containing inorganic fillers whereby the fillers have been coated with polycarboxylate ethers. However, such compositions can still be improved in terms of flow properties and strength of the expoxy resin composition, especially at early times.

WO 2013/020862 A1 discloses a process for the production by spray drying of solid dispersants for a hydraulically binding composition. In contrast to the present invention, the compositions of WO 2013/020862 A1 do not comprise any epoxy resins.

WO 2011/029711 A1 discloses dispersant formulations for hydraulic binder and especially gypsum containing compositions. Unlike the present invention, WO 2011/029711 A1 does not disclose any compositions comprising epoxy resins.

US 2004/211342 A1 discloses an admixture formulation for cementitious compositions comprising at least one polycarboxylate dispersant combined with at least one naphthalene dispersant. Contrary to the present invention, US 2004/211342 A1 does not disclose any compositions comprising epoxy resins.

EP 2 524 903 A1 deals with compositions for plastering comprising at least one superplasticizer, preferably modified polycarboxylic ethers, at least one mineral filler, and water. However, unlike the present invention, EP 2 524 903 A1 does not describe a dispersant comprising at least two different polymers. Also, EP 2 524 903 A1 is not concerned with compositions comprising curable epoxy resins.

US 9,145,335 B2 discloses to a process for producing a setting and hardening accelerator for mineral binder compositions, comprising a step of reacting a calcium compound with a silicon compound. In contrast to the present invention, US 9,145,335 B2 does not describe a dispersant comprising at least two different polymers. Also, US 9,145,335 B2 does not describe any compositions comprising curable epoxy resins.

US 2015/284563 A1 relates to curable epoxy resin compositions containing at least one epoxy resin having on average more than one epoxide group per molecule, at least one inorganic filler and at least one polycarboxylate ether, wherein the inorganic filler is coated with the polycarboxylate ether. However, US 2015/284563 A1 does not describe a dispersant comprising a comb polymer in combination with a condensate of at least an aromatic compound and formaldehyde or a lignosulfonate. Moreover, US 2015/284563 A1 does not disclose any strength improvements caused by dispersants.

There is thus still a need to develop new and improved methods and additives, which improve in an efficient and simple manner the compatibility of inorganic fillers with curable epoxy resin compositions as well as the processing properties, the flowability and strength of epoxy resin products.

### Disclosure of the invention

It is an object of the present invention to overcome the problems described above. Means and methods are to be provided to achieve the incorporation of inorganic fillers in epoxy resin compositions in an efficient and simple manner, in particular without adversely affecting the properties and stability of the products. In particular, the invention shall ensure a good workability and flowability over long processing periods of curable epoxy compositions even in the presence of high amounts of filler. Additionally, the strength of epoxy resin compositions shall preferably be improved, in particular at early times, especially 1 - 3 days after processing of the curable epoxy resin composition.

Surprisingly, it has been found that these objects are achieved by the features of claim 1. Thus, the core of the invention is a curable epoxy resin composition comprising at least one epoxy resin, at least one inorganic filler and at least one dispersant, whereby the dispersant comprises:
a) at least one first polymer, which is a comb polymer having a polymer backbone comprising acid groups and side chains which are linked to the polymer backbone, and
b) at least one second polymer, which is a condensate of, at least, an aromatic compound and formaldehyde; or a lignosulfonate.

Surprisingly, it was found that by using a dispersant comprising a first polymer and a second polymer, the problems underlying the present invention can be solved. In particular, the invention provides a simple and efficient way for improving the workability, flowability and strength of epoxy resin compositions with fillers.

By the addition of the inventive dispersant, the flowability can significantly be improved over a long period of time. In addition, the composition can take up a large amount of inorganic fillers. Here, a homogeneous distribution of the filler in the composition can be achieved. Surprisingly, these beneficial effects can already be achieved when relatively small amounts of dispersant is present. This is particularly important at high filler contents, since a high proportion of non-crosslinkable dispersants would reduce the stability of the cured epoxy matrix.

Even more surprisingly, when using the inventive dispersant, it is possible to produce epoxy resin compositions with rather high compressive and flexural strengths, especially at early times, e.g 1 - 3 days after processing of the curable epoxy resin composition. This is in particular believed to be caused by a functional and synergistic interaction between the first and the second polymer.

Also, the epoxy resin composition according to the invention can be provided as a multi-component system and can be produced by mixing the components within a few minutes. The components are readily accessible and manageable and relatively inexpensive. It is not necessary to modify the fillers chemically. Using the inventive dispersant the user can individually set the flowability of various specific epoxy resin compositions. Only small amounts of the dispersant can be used and do not affect adversely the stability of the cured epoxy resins. Through increased filler levels of the epoxy resins, products with improved properties can be produced and raw material costs can be saved, as inorganic fillers are generally less expensive than epoxy resins. The dispersing agents according to the invention need not be bonded covalently with fillers by chemical reactions, which also saves energy costs since no elevated reaction temperatures are required.

Additional aspects of the invention are subject of further independent claims. Particularly preferred embodiments are outlined throughout the description and the dependent claims.

### Ways of carrying out the invention

A first aspect of the invention relates to a curable epoxy resin composition comprising at least one epoxy resin, in particular on average having more than one epoxide group per molecule, at least one inorganic filler and at least one dispersant, whereby the dispersant comprises:
c) at least one first polymer, which is a comb polymer having a polymer backbone comprising acid groups and side chains which are linked to the polymer backbone, and
d) at least one second polymer, which is a condensate of, at least, an aromatic compound and formaldehyde; or a lignosulfonate.

Compound names beginning with "poly" designate substances, which formally contain, per molecule, two or more of the functional groups occurring in their names. The compound can be a monomeric, oligomeric or polymeric compound. For instance, a polyol is a compound having two or more hydroxy groups.

If not stated otherwise, the average molecular weight is understood to mean the number average molecular weight, as determined using conventional methods, preferably by gel permeation-chromatography (GPC), typically using polystyrene as standard, styrene-divinylbenzene gel with porosity of 100 Angstrom, 1'000 Angstrom and 10'000 Angstrom as the column and tetrahydrofurane as a solvent, at 35°C. When determining the molecular weight of comb polymers, polyethylene glycol (PEG) is used as a standard.

Epoxy resin compositions include cross-linkable epoxy resins having on average more than one epoxide group per molecule. These react with suitable curing agents to form covalent bonds. According to the invention, the curable epoxy resin composition may already contain the curing agent or may not contain the curing agent. The epoxy resin composition according to the invention is curable, because the epoxide groups have not yet or have only partially reacted with the curing agent. Therefore, the composition is preferably liquid or pasty. Preferably, it has not yet solidified by partial curing to form a solid.

The inorganic filler preferably is coated with the first polymer, the second polymer and/or the dispersant. In other words, the filler preferably is provided with the first polymer, the second polymer and/or the dispersant on the filler surface. Especially, the filler is coated with the dispersant or with at least the first polymer and the second polymer simultaneously, respectively.

Preferably, the coating is not covalently bonded to the surface. According to the invention it was found that a sufficiently stable coating and effectiveness can be achieved even without covalent bonding.

Preferably, the filler surface is coated completely, that is, without gaps. However, it may also be only partially coated, for example on average to the extent of more than 20%, more than 50%, or more than 90%.

In a preferred embodiment of the invention, the inorganic filler, in particular the coated inorganic filler, is present in solid form, particularly in the form of a powder.

Even after storage for extended periods of time, coated inorganic fillers can be used according to the invention. Without being bound by theory, it is believed that the first polymer of the dispersant (the comb polymer having a polymer backbone comprising acid groups and side chains which are linked to the polymer backbone) is absorbed with the acid group containing main chain on the surface of the fillers, while the side chains face away from the filler surfaces and cause a steric stabilization of the filler particles. Similarly, it is believed that the second polymer (condensates of, at least, an aromatic compound and formaldehyde; or a lignosulfonate) is absorbed on the fillers. Thereby a stabilization of the particles is mainly achieved through electrostatic repulsion. Such alignments and effects of the first and second polymers on the surface of inorganic particles have been described for cement compositions.

In a preferred embodiment, the inorganic filler is first impregnated and/or wetted with a solvent, and subsequently the first polymer, the second polymer and/or the dispersant is added to and/or intermixed with the inorganic filler. This procedure allows in particular for at least partially coating the inorganic filler with the first polymer, the second polymer and/or the dispersant.

Thereby, in particular, the first polymer, the second polymer and/or the dispersant is added to the inorganic filler in solid form, especially in powder form. Most preferably, a spray-dried dispersant as described below is used. Suitable solvent are described below whereby especially preferred solvents are esters, ethers and/or alcohols. Benzyl alcohol is especially preferred.

For example, the impregnation and/or wetting can be effected by spraying of the solvent onto the inorganic filler while mixing it.

However, it is also possible that the inorganic filler is coated by impregnation with a solution or suspension containing or consisting of the first polymer, the second polymer and/or the dispersant, as well as a solvent. Thereby, especially, the inorganic filler is coated by impregnation with a solution or suspension containing the dispersant as well as a solvent. The impregnation can be done in any suitable manner. For example, a solid filler mixture can be charged in first, then a solution or suspension of the first polymer, the second polymer and/or the dispersant in the solvent added, for example by spraying in a mixer.

In a preferred embodiment, during impregnation the solvent is adsorbed by the filler on the surface thereof.

In this context, the coated filler is an essentially solid filler, which is provided on the surface with the first polymer, the second polymer and/or the dispersant, and also contains the solvent. The solvent on the particle surface can then act as a mediator between the epoxy resin matrix and the first polymer, the second polymer and/or the dispersant. Without being bound by theory, it is believed that the first polymer, the second polymer and/or the dispersant dissolved in the solvent on the one hand improves the compatibility between the filler surface and epoxy resin matrix, and on the other hand, the flowability of the filled epoxy resin mixture is improved by electrostatic repulsion and steric stabilization of the filler particles. This embodiment also has the advantage that no drying steps or other steps for removal of the solvent are required, and that only a small amount of solvent is required in total.

The solvent may also diffuse at least partially into the interior of the filler. In a further embodiment, after impregnation of the filler the solvent can be removed partially or completely, for example by drying.

In general, the solvent is selected so that the first polymer, the second polymer and/or the dispersant dissolves well in the solvent. At the same time, the solvent should be compatible with the epoxy resin, i.e. not undesirably interact with it. Preferably, the solvent in the composition is inert, that is, not reactive. The solvent is preferably an organic solvent. In general, water is not or is only marginally suitable, since it can affect the epoxy resin reaction in an undesirable manner as other protic solvents do. If water or another non-compatible solvent is used to impregnate the filler, it should be removed prior to the introduction of the fillers in the epoxy resin, for example by drying. Small amounts of water or other solvents which do not or only slightly affect the epoxy resin composition, however, are acceptable.

The solvent is preferably polar. Polar solvents are better suited to dissolve first and second polymers according to the present invention. The solvent is preferably liquid at room temperature (23 °C).

The solvent is preferably amphiphilic. It was found that amphiphilic solvents having a polar and a hydrophobic molecular component can support the mixing of the coated fillers with an epoxy resin composition to a particular extent.

Preferably, the solvent is an ester, ether or alcohol. The solvent may be, in particular, an alkyl alcohol, alkyl acid alkyl ester or dialkyl alcohol, wherein the alkyl radicals in each case may be branched or straight and can have, for example, 1 to 10, in particular 2 to 6 carbon atoms.

The alcohol may be a di- or polyalcohol and the ether may be a polyether such as polyethylene glycol, e.g., triethylene glycol. The solvent may also be a phenol such as nonylphenol. Particularly preferably, the solvent is benzyl alcohol, propylene carbonate, phenoxyethanol or glycol ether. Benzyl alcohol is especially preferred. Mixtures of the above solvents may be used as well.

In a preferred embodiment the solvent is a high boiler. Preferably, the boiling point is above 150°C, more preferably above 200°C. This makes coated fillers that have been impregnated with the solvent relatively stable in storage and use. In particular, it is believed that the solvent remains adsorbed at the surface of the fillers and does not volatilize or diffuse away in an undesirable manner.

In a preferred embodiment, the epoxy resin composition is anhydrous. This means that it contains no water or possibly contains small amounts of water. The water content can be, for example, less than 0.5 wt.%, less than 0.1 wt.% or less than 0.05 % wt.%, based on the total weight of the composition.

In a further embodiment of the invention, the epoxy resin composition contains an organic solvent which is liquid at room temperature (23°C). The solvent may serve, for example, to adjust the viscosity or to promote or ensure the mixing of the components. The proportion of the organic solvent is preferably less than 10 wt.% or less than 2 wt.%, based on the total weight of the composition. The proportion may be, for example, 0.01 to 50 wt.%, 0.1 to 20 wt.% or 0.2 to 2 wt.%, based on the total weight of the composition.

The epoxy resin composition according to the invention contains at least one epoxy resin. Epoxy resins are low molecular weight or polymeric compounds having epoxide groups. Suitable epoxy resins for producing plastic materials are known in the prior art and commercially available. If the epoxy resins have a defined, exact number of epoxide groups per molecule, they preferably have at least two epoxide groups per molecule, for example, two, three, four or more epoxide groups per molecule.

If the epoxy resins are polymers having varying numbers of epoxide groups in the molecule, the epoxy resin preferably have on average more than one epoxide group per molecule in order to achieve overall crosslinking. The epoxy resin then preferably contains an average of at least two, at least three or at least four epoxide groups per molecule. According to the invention, mixtures of different epoxy resins can be used, for example, of two, three or more different epoxy resins.

The epoxy resin having on average more than one epoxide group per molecule is preferably a liquid epoxy resin. Such liquid resins contain freely movable polymer molecules not yet cross-linked. Preferably, it is not a polymer dispersion of already cured epoxy resin particles.

Epoxy resins are frequently ether compounds, in particular polyethers. In a preferred embodiment of the invention the epoxy resin is a glycidyl ether. It preferably has two, three, four or more glycidyl groups per molecule, or, preferably, on average at least two, three, four or more glycidyl groups per molecule. Preferred polymers are those having terminal glycidyl groups.

Epoxy resins are often condensates of glycidyl compounds and polyalcohols, in particular diols. Preferred are epoxy resins or condensates or polymers that were produced using bisphenols. Bisphenols are a group of chemical compounds bearing two hydroxyphenyl groups. The glycidyl compound epichlorohydrin is often used as a reactant.

### Preferred epoxy resins have formula (X)

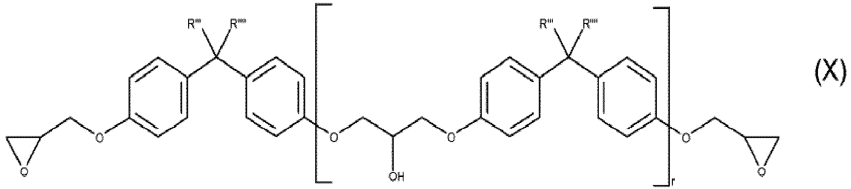

Here, the substituents R‴ and Rʺʺ independently of one another represent H or CH₃. Furthermore, the subscript r represents a value of 0 to 1. Preferably, r represents a value of less than 0.2, especially 0.01 - 0.15.

Therefore preferably diglycidyl ethers of bisphenol A (DGEBA), of bisphenol F and of bisphenol A/F are used. The designation "A/F" here refers to acetone and formaldehyde, used among other things as reactants in the preparation. Such liquid resins are available, for example, as Araldite^{®} GY250, Araldite^{®} PY304, Araldite^{®} GY282 (Huntsman) or D.E.R.^{™} 331 or D.E.R.^{™} 330 (Dow) or Epikote 828 or Epikote 862 (Hexion).

Also suitable as epoxy resin are so-called novolacs. They have in particular the following formula: 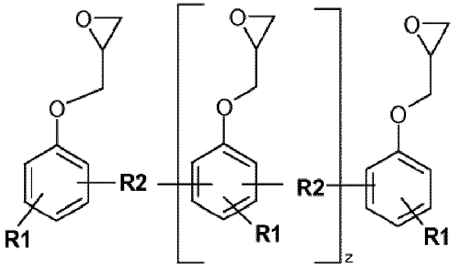 wherein **R2** = 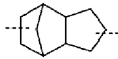 or CH₂, **R1** = H or methyl, and z = 0 to 7, especially 1 - 6.

In particular, these are phenol or cresol novolacs (**R2** = CH₂).

Such epoxy resins are commercially available under the trade name EPN or ECN and Tactix^{®}556 from Huntsman or the product series D.E.N.^{™} from Dow Chemical.

The epoxy resin composition preferably further contains at least one reactive diluent. Epoxy resin reactive diluents serve to control the reaction. They may be low-viscosity, aliphatic or cycloaliphatic epoxy compounds such as glycidyl ethers. The reactive diluents are preferably monofunctional glycidyl ethers such as C12-C14 monoglycidyl ether, difunctional glycidyl ethers such as butanediol diglycidyl ether or hexanediol diglycidyl ether, trifunctional glycidyl ethers such as trimethylolpropane triglycidyl ether, aliphatic polyols having one, two, three or more functional glycidyl ether groups. Also suitable are epoxidized soybean oil or linseed oil, acetoacetate-containing compounds, in particular acetoacetylated polyols, butyrolactone, and further isocyanates and reactive group-containing silicones.

Especially, a proportion of reactive diluent in the curable epoxy resin composition is preferably between 0.5 to 10 % by weight, preferably in the range of 1 to 5 % by weight, based on the total weight of the curable epoxy resin composition.

In a preferred embodiment of the invention, the epoxy resin composition contains at least one curing agent. The epoxy resin composition may already be in the process of curing. Alternatively, the reaction does not yet begin even in the presence of the curing agent because the composition was not yet sufficiently activated. Such compositions typically contain a latent curing agent. The activation of epoxy resin composition having latent curing agents can be done by addition of catalysts or by increasing the temperature, for example to temperatures above 80°C or above 150°C.

Especially, the composition according to the invention additionally contains at least one curing agent for epoxy resins. Common and known compounds which react with the epoxide groups may be used as the curing agent. Thereby, the epoxy resin is cross-linked. Curing agents are preferably basic curing agents, in particular amine compounds or amides. Preferably, the curing agents contain at least two primary or secondary amino groups per molecule. Amine compounds having two or more amino groups per molecule are hereinafter referred to as "polyamines". If the polyamines are polymers, they contain on average at least two amino groups per molecule. According to the invention, mixtures of different curing agents may be used, for example, of two, three or more different curing agents.

In a preferred embodiment of the invention the curing agent contains at least one polyamine, which is preferably selected from the group consisting of aliphatic, cycloaliphatic or arylaliphatic primary diamines, triamines and tetramines, polyamines with more than four amine groups per molecule, secondary amino group-containing polyamines, amine/polyepoxide adducts, poly(ethylene imines), polyamidoamines, polyetheramines and amino group-terminated butadiene/acrylonitrile copolymers.

Polyamines are also polyoxyalkylene diamines with molecular weight below 500 g/mol (Jeffamine^{®} D-230, Jeffamine D400, Jeffamine^{®} EDR-148), 4,7,10-trioxatridecane-1-13-diamine, 4,9-dioxadodecane-1,12-diamine, ethylene diamine and/or 3(4),8(9)-bis-(aminomethyl)-tricyclo[5.2.1.02,6]decane (TCD diamine^{®}, manufactured by Celanese Chemicals).

Other polyamines that are suitable as curing agents are, for example:
- Aliphatic, cycloaliphatic or arylaliphatic primary diamines, for example, ethylenediamine, 1,2-propanediamine, 1,3-propanediamine, 2-methyl-1,2-propanediamine, 2,2-dimethyl-1,3-propanediamine, 1,3-butanediamine, 1,4-butanediamine, 1,3-pentanediamine (DAMP), 1,5-pentanediamine, 1,5-diamino-2-methylpentane (MPMD), 2-butyl-2-ethyl-1,5-pentanediamine (C11-neodiamine), 1,6-hexanediamine, 2,5-dimethyl-1,6-hexanediamine, 2,2,4- and 2,4,4-trimethylhexamethylenediannin (TMD), 1,7-heptanediamine, 1,8-octanediamine, 1,9-nonanediamine, 1,10-decanediamine, 1,11-undecanediamine, 1,12-dodecanediamine, 1,2-, 1,3- and 1,4-diaminocyclohexane, bis-(4-aminocyclohexyl)-methane (H12-MDA), bis-(4-amino-3-methylcyclohexyl)-methane, bis-(4-amino-3-ethylcyclohexyl)-methane, bis-(4-amino-3,5-dinnethylcyclohexyl)-methane, bis-(4-amino-3-ethyl-5-methylcyclohexyl)-methane (M-MECA), 1-amino-3-aminomethyl-3,5,5-trimethylcyclohexane (= isophorone diamine or IPDA), 2- and 4-methyl-1,3-diaminocyclohexane and mixtures thereof, 1,3- and 1,4-bis-(aminomethyl)-cyclohexane, 1,3-cyclohexylenebis-(methylamine), 2,5(2,6)-bis-(aminomethyl)-bicyclo[2.2.1]heptane (NBDA), 3(4),8(9)-bis-(aminomethyl)-tricyclo[5.2.1.02,6]decane, 1,4-diamino-2,2,6-trimethylcyclohexane (TMCDA), 1,8-menthane diamine, 3,9-bis-(3-aminopropyl)-2,4,8,10-tetraoxaspiro[5.5]undecane as well as 1,3- and 1,4-xylylenediamine;
- Ether group-containing aliphatic primary diamines; for example bis-(2-aminoethyl)-ether, 3,6-dioxaoctane-1 8-diamine, 4,7-dioxadecane-1,10-diamine, 4,7-dioxadecane-2,9-diamine, 4,9-dioxadodecane-1,12-diamine, 5,8-dioxadodecane-3,10-diamine, 4,7,10-trioxatridecane-1,13-diamine and higher oligomers of these diamines, bis-(3-aminopropyl)-polytetrahydrofurans and other polytetrahydrofuran diamines with molecular weights in the range of, for example, 350 to 2000 and polyoxyalkylene diamines. The latter are typically products from the amination of polyoxyalkylene diols and are for example available under the name Jeffamine^{®} (Huntsman), under the name polyether amine (from BASF) or under the name PC Amines^{®} (from Nitroil). Particularly suitable polyoxyalkylene diamines are Jeffamine^{®} D-230, Jeffamine^{®} D-400, Jeffamine^{®} D-2000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; polyether amine D 230, polyether amine D 400 and polyether amine D 2000, PC Amine^{®} DA 250, PC Amine^{®} DA 400, PC Amine^{®} DA 650 and PC Amine^{®} DA 2000;
- secondary amino group-containing polyamines; for example, diethylenetriamine (DETA), N,N-bis-(2-aminoethyl)-ethylenediamine, dipropylenetriamine (DPTA), bis-hexamethylenetriamine (BHMT), 3-(2-aminoethyl)-aminopropylamine, triethylenetetramine, tetraethylenepentamine, N3-(3-aminopentyl)-1,3-pentanediamine, N5-(3-aminopropyl)-2-methyl-1,5-pentanediamine, N5-(3-amino-1-ethylpropyl)-2-methyl-1,5-pentanediamine, N,N'-dibutylethylenediamine; N,N'-di-tert-butylethylenediamine, N,N'-diethyl-1,6-hexanediamine, 1-(1-methylethylamino)-3-(1-methylethyl-aminomethyl)-3,5,5-trimethylcyclohexane (Jefflink^{®} 754 from Huntsman), N4-cyclohexyl-2-methyl-N2-(2-methylpropyl)-2,4-pentanediamine, N,N'-dialkyl-1,3-xylylenediamine, bis-(4-(N-alkylamino)-cyclohexyl)-methane, 4,4'-trimethylene dipiperidine, N-alkylated polyetheramines, for example, Jeffamine^{®} types SD-231, SD-401, SD-404 and SD-2001 (from Huntsman);
- amine/polyepoxide adducts; particularly adducts of the aforementioned polyamines with diepoxides in a molar ratio of at least 2/1, in particular in the molar ratio of 2/1 to 10/1;
- polyamidoamines, which are reaction products of a mono- or polybasic carboxylic acid or esters or anhydrides thereof, in particular reaction products of a dimer fatty acid and an aliphatic, cycloaliphatic or aromatic polyamine used in a stoichiometric excess, in particular a polyalkylene amine such as DETA or triethylenetetramine (TETA), in particular the commercially available polyamidoamines Versamid^{®} 100, 125, 140 and 150 (from Cognis), Aradur^{®} 125, 140, 223, 250 and 848 (from Huntsman), Euretek^{®} 3607, Euretek^{®} 530 (from Huntsman), Beckopox^{®} EH 651, EH 654, EH 655, EH 661 and EH 663 (from Cytec);

- polyethyleneimines (PEI), which are branched polymeric amines from the polymerization of ethyleneimine. A suitable polyethyleneimine typically has an average molecular weight in the range of 250 to 25,000 g/mol and contains tertiary, secondary and primary amino groups. Polyethyleneimines are available, for example, under the trade name Lupasol^{®} (from BASF), for example Lupasol^{®} WF, Lupasol^{®} FG, Lupasol^{®} G20 and Lupasol^{®} PR 8515.
- Mannich bases; namely amines with further functional groups, which are obtainable by the Mannich reaction in which an aminoalkylation of CH-acidic compounds with an aldehyde and ammonia, or a primary or secondary amine takes place.

Acidic curing agents can also be used as the curing agents, in particular acid anhydrides. Catalytically active curing agents such as fluorides can also be used, for example, boron trifluoride.

The curable epoxy resin composition is preferably formulated such that the content of the curing agent is in the range of 0.5 to 10% by weight, preferably in the range of 1 to 10 % by weight, based on the total weight of the curable epoxy resin composition.

The epoxy resin composition according to the invention contains inorganic fillers. The inorganic fillers are preferably mineral fillers. The inorganic fillers may be of natural origin or produced artificially. Suitable fillers are known in the prior art and commercially available. They are used in particular to increase the stability of the epoxy resin and to save epoxy resin. They may also perform other functions, for example, as pigments for coloring, to control the rheology or as fire retardants. The fillers can be synthetic fillers or naturally occurring minerals. They are preferably oxygen-containing compounds. Usually, oxides, mixed oxides or salts of metals and semi-metals, in particular silicon, are used. The fillers can also be metallic such as aluminum, in particular in the form of aluminum powder. In a preferred embodiment, the fillers are not metals.

The inorganic fillers are preferably selected from silicon compounds such as silica, silicates and precipitated and fumed silicas; metal oxides such as titanium dioxide, iron oxide, alumina, zinc oxide and magnesium oxide; metal carbonates such as calcium carbonate or dolomite; metal sulfates such as calcium sulfate (gypsum) and barium sulfate; metal hydroxides such as aluminum hydroxide, nitrides or carbides, clay minerals such as kaolin, fly ash, cement, glass and ceramic materials.

The silica may be for example quartz, e.g., in the form of quartz powder or quartz sand. The silicate may be, for example, talc, mica or wollastonite. The sulfate may be, for example barite (heavy spar, barium sulfate). Mixtures of different fillers and/or different fractions of a filler having different sizes may be used also. The fillers may have customary forms. In particular, powders can be used, as well as hollow spheres (for example made of glass or ceramic) or fibers.

The fillers are preferably coated with the first polymer, the second polymer and/or the dispersant.

Preferably, apart from that, the fillers are not coated and in particular are not provided with a covalently bound surface coating. According to the invention it has been found that simple non-surface-treated inorganic fillers may be incorporated in epoxy resin compositions and processed efficiently in the presence of dissolved first polymer, second polymer and/or dispersant as a dispersing agent. It is therefore not necessary according to the invention that the fillers additionally be surface coated covalently, for example, previously made hydrophobic. Notwithstanding this, according to the invention, however, pre-treated or precoated or surface-modified fillers can be used.

The size of the fillers and the particle size distribution are selected in view of the desired properties of the epoxy resin composition and of the cured epoxy resin. The fillers used according to the invention may therefore be of any particle size, for example from 1 µm to 1 cm, in particular between 10 µm and 6 mm. The average particle size of the fillers, for example, may be between 10 µm and 3 mm. The particle size and particle size distribution of fillers can be determined by screen analysis or by microscopic examination.

In a particularly preferred embodiment, the inorganic fillers are finely divided fillers, or the fillers have a proportion of finely divided fillers, which is preferably added during production as a finely divided filler fraction. It has been found according to the invention that inventive dispersants are particularly efficient in the presence of finely divided fillers as a dispersing agent in epoxy resin compositions.

Finely divided fillers are in particular fillers with absolute particle sizes less than 60 µm. Finely divided fillers are in particular fillers having an average particle size of less than 50 µm, less than 30 µm or less than 10 µm. Here, the particle size of the finely divided fillers can be at least 0.5 µm, at least 1 µm or at least 2 µm. Preferably, the finely divided fillers have particle sizes from 0.5 to 60 µm, in particular between 1-30 µm.

In a preferred embodiment of the invention a mixture of different fillers and/or fractions of the same filler are/is used, which have different particle sizes. For example, a mixture of finely divided fillers with absolute particle sizes less than 60 µm and coarser fillers with absolute particle sizes of 60 µm to 1 cm can be used. Preferably, the finely divided fillers are coated with the inventive dispersant. Optionally, further fractions of inorganic fillers, which are not finely divided fillers, may be coated as well. However, proportions of finely divided fillers or coarser fillers that are not coated may be included as well.

In a preferred embodiment of the invention, the inorganic fillers comprise a proportion of finely divided fillers, which is preferably coated, and which is at least 5 wt.%, preferably at least 10 wt.%, at least 50 wt.%, at least 80 wt.% or at least 95 wt.%, based on the total weight of all inorganic fillers. Here, the epoxy resin composition may also contain only finely divided fillers as the fillers.

In one embodiment of the invention, only a portion of the fillers is coated with the first polymer, the second polymer and/or the dispersant, while the remaining fillers are not coated. Preferably, a filler fraction is coated, the average particle size of which is smaller than that of the non-coated fillers. Preferably, only one filler fraction with absolute particle sizes less than 100 µm, less than 60 µm or less than 20 µm is coated. Here, for example, between 5 and 100 wt.%, preferably between 5 and 90 wt.% or between 5 and 60 wt.%, in particular between 10 and 60 wt.% or between 10 and 30 wt.% are coated, based on the total weight of all inorganic fillers in the epoxy resin composition. As a result, overall dispersant may be saved, wherein advantageous properties are achieved at least in part.

In a preferred embodiment, the proportion of filler in the epoxy resin composition and/or in the cured epoxy resin is, based on the total weight, at least 50 wt.%, preferably at least 60 wt.% or at least 70 wt.%, even more preferably at least 80 wt.% or at least 85 wt.% or at least 90 wt.%. Preferably, the filler content is between 50 and 90 wt.%, in particular between 60 and 90 wt.% or between 78 and 90 wt.%. It has been found that high filler contents according to the invention of 80 to 90 wt.% can be incorporated readily into epoxy resin compositions, whereby a good flowability is achieved and stable cured epoxy resins are obtained.

Preferably, based on 100 parts by weight of inorganic fillers between 0.01 and 2 parts by weight, in particular between 0.02 to 1 parts by weight, more preferably 0.1 to 0.5 parts by weight of dispersant are used.

The curable epoxy resin composition is preferably formulated such that the content of the epoxy binder is in the range of 1 to 20% by weight, preferably in the range of 2 to 10 % by weight, based on the total weight of the curable epoxy resin composition.

### First Polymer:

The dispersant according to the invention comprises at least one first polymer, which is a comb polymer. The comb polymer has a polymer backbone or main chain, which comprises acid groups, and side chains which are linked to the polymer backbone.

With advantage, the side chains are bonded to the main chain via ester, ether, amide and/or imide groups. Ester, ether and/or amide groups are preferred, especially ester and/or ether groups.

More particularly the side chains comprise polyalkylene oxide side chains. With preference at least 50 mol%, more particularly at least 75 mol%, preferably at least 95 mol%, especially at least 98 mol% or 100 mol% of the side chains consist of polyalkylene oxide side chains.

A fraction of ethylene oxide units in the polyalkylene oxide side chains, based on all alkylene oxide units present in the side chains, is preferably more than 90 mol%, more particularly more than 95 mol%, preferably more than 98 mol%, especially 100 mol%.

In particular the polyalkylene oxide side chains have no hydrophobic groups, more particularly no alkylene oxides having three or more carbon atoms. A high fraction of ethylene oxide units or a low level of alkylene oxides having three or more carbon atoms reduces the risk of unwanted air entrainment.

The polyalkylene oxide side chains have, in particular, a structure in accordance with formula -[AO]ₙ-R^{a}. In this formula, in particular, A is C2 to C4 alkylene. R^{a} is preferably H or a C1 to C20 alkyl, cycloalkyl or alkylaryl group. Advantageously n is 2 - 250, especially 10 - 150.

The term "acid groups" presently encompasses, in particular, carboxyl groups, sulfonic acid groups, phosphoric acid groups and/or phosphonic acid groups. The acid groups may each be in protonated form, in deprotonated form, for example as anion, and/or in the form of a salt with a counter ion or cation. Consequently, for example, the acid groups may be in partially or fully neutralized form.

The acid groups in particular have a structure according to formula COOM, SO₂-OM, -O-PO(OM)₂ and/or -PO(OM)₂. Very preferably the acid groups have a structure according to the formula -COOM. Each M here, independently of the others, is H, an alkali metal ion, an alkaline earth metal ion, a di- or trivalent metal ion, an ammonium ion or an organic ammonium group.

If M is an organic ammonium group, it derives in particular from alkylamines or from C-hydroxylated amines, more particularly from hydroxyalkylamines, such as ethanolamine, diethanolamine or triethanolamine, for example.

The comb polymer is in particular a polycarboxylate ether with a polycarboxylate backbone and polyether side chains, wherein the polyether side chains are bound via ester, ether and/or amide groups to the polycarboxylate backbone.

A weight-average molecular weight (Mw) of the comb polymer is more particularly 5'000 - 150'000 g/mol, preferably 10'000 - 100'000 g/mol. A number-average molecular weight (Mn) of the comb polymer is advantageously 3'000 - 100'000 g/mol, more particularly 8'000 - 70'000 g/mol.

The comb polymer preferably comprises or consists of the following structural subunits:
a) a mole fractions of a structural subunit S1 of the formula (I) 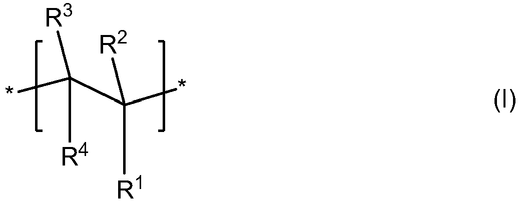
b) b mole fractions of a structural subunit S2 of the formula (II) 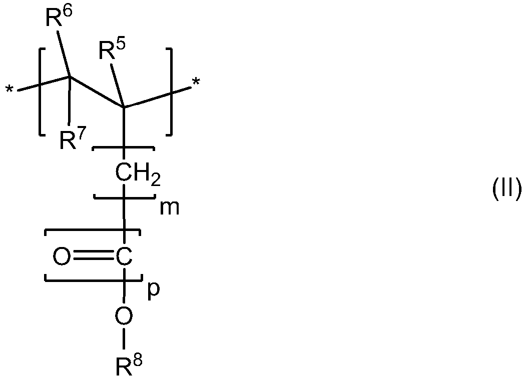
c) optionally c mole fractions of a structural subunit S3 of the formula (III) 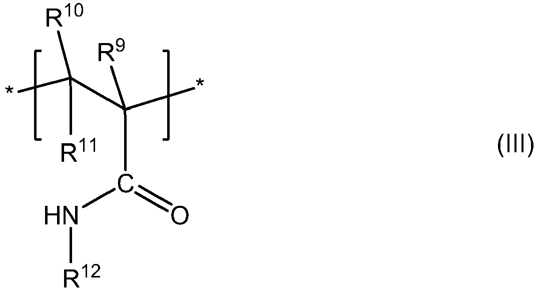
d) optionally d mole fractions of a structural subunit S4 of the formula (IV) 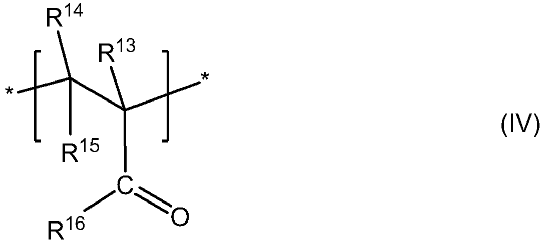
where
R¹, in each case independently of any other, is -COOM, -SO₂-OM, -O-PO(OM)₂ and/or -PO(OM)₂,
R², R³, R⁵, R⁶, R⁹, R¹⁰, R¹³ and R¹⁴, in each case independently of one another, are H or an alkyl group having 1 to 5 carbon atoms,
R⁴, R⁷, R¹¹ and R¹⁵, in each case independently of one another, are H, -COOM or an alkyl group having 1 to 5 carbon atoms,
M, independently of any other, is H⁺, an alkali metal ion, an alkaline earth metal ion, a di- or trivalent metal ion, an ammonium ion or an organic ammonium group,
m is 0, 1 or 2,
p is 0 or 1,
R⁸ and R¹², in each case independently of one another, are a C₁ to C₂₀ alkyl, cycloalkyl or alkylaryl group or are a group of the formula -[AO]ₙ-R^{a}, where A is C₂ to C₄ alkylene, R^{a} is H, a C₁ to C₂₀ alkyl, cycloalkyl or alkylaryl group, and n is 2 - 250, especially 5 - 100, preferably, 10 - 50,
R¹⁶, independently of any other, is NH₂, -NR^{b}R^{c} or -OR^{d}NR^{e}R^{f,}
   where R^{b} and R°, independently of one another, are
      a C₁ to C₂₀ alkyl, cycloalkyl, alkylaryl or aryl group,
      or are a hydroxyalkyl group or are an acetoxyethyl (CH₃-CO-O-CH₂-CH₂-) or a hydroxyisopropyl (HO-CH(CH₃)-CH₂-) or an acetoxyisopropyl (CH₃-CO-O-CH(CH₃)-CH₂-) group;
   or R^{b} and R^{c} together form a ring of which the nitrogen is a part, in order to construct a morpholine or imidazoline ring;
   R^{d} is a C₂-C₄ alkylene group,
   R^{e} and R^{f} each independently of one another are a C₁ to C₂₀ alkyl, cycloalkyl, alkylaryl or aryl group or a hydroxyalkyl group,
and where a, b, c and d are mole fractions of the respective structural subunits S1, S2, S3, and S4, where a/b/c/d = (0.1 - 0.9) / (0.1 - 0.9) / (0 - 0.8) / (0 - 0.8), more particularly a/b/c/d = (0.3 - 0.7) / (0.2 - 0.7) / (0 - 0.6) / (0 - 0.4), preferably a/b/c/d = (0.4 - 0.7) / (0.3 - 0.6) / (0.001 - 0.005) / 0, and with the proviso that a + b + c + d is 1.

The sequence of the structural subunits S1, S2, S3, and S4 may be alternating, block like or random . It is also possible, moreover, for there to be further structural subunits in addition to the structural subunits S1, S2, S3, and S4.

The structural subunits S1, S2, S3, and S4 together preferably have a weight fraction of at least 50 wt.%, more particularly at least 90 wt.%, very preferably at least 95 wt.%, of the total weight of the comb polymer.

A ratio of a/(b+c+d) = is in particular in the range of 0.5 - 8, preferably 0.75 - 5, especially 0.8 - 3, more particularly 0.85 - 2 or 0.9 - 1.5.

In the comb polymer, in particular, R¹ is COOM, R² is H or CH₃, and R³ = R⁴ = H. The comb polymer can therefore be prepared on the basis of acrylic or methacrylic acid monomers, this being of advantage from an economic standpoint.

Likewise advantageous are comb polymers where R¹ = COOM, R² = H, R³ = H, and R⁴ = COOM. Such comb polymers can be prepared on the basis of maleic acid monomers.

Advantageously, R⁵ is H or CH₃ and R⁶ = R⁷ = H. Comb polymers of these kinds can be prepared, for example, starting from (meth)acrylic esters, vinyl ethers, (meth)allyl ethers or isoprenol ethers.

If S3 is present, then in particular R⁹ is H or CH₃ and R¹⁰ = R¹¹ = H.

If S4 is present, then in particular R¹³ is H or CH₃ and R¹⁴ = R¹⁵ = H.

Very advantageously, R² and R⁵ are mixtures of H and -CH₃. Preferred in that case are mixtures with 40 - 60 mol% H and 40 - 60 mol% -CH₃. If the corresponding structural subunits are present, this is also true, in particular, for R⁹ and R¹³. With preference, moreover, R³ and R⁶ are H, and also, if the corresponding structural subunits are present, R⁹ and R¹³ are H.

According to a further advantageous embodiment, R¹ is COOM, R² = H, R⁵ = -CH₃, and R³ = R⁴ = R⁶ = R⁷ = H.

In the case of another advantageous embodiment, R¹ is COOM, R² = R⁵ = H or - CH₃, and R³ = R⁴ = R⁶ = R⁷ = H.

In particular, R⁸ and/or R¹² are -[AO]ₙ-R^{a}, and preferably A is C₂ alkylene and/or R^{a} is H or a C₁ alkyl group.

Advantageously, n is 2 - 50, more particularly n is 5 - 40, preferably n is 20 - 30, especially n is 8 - 25, in particular n is 10 - 15.

In particular, m is 0 and p is 1. Likewise advantageously, m is 1 or 2 and p is 0, and, in particular, R⁵ is -CH₃.

For particularly preferred comb polymers:
a) R¹ is COOM;
b) R² and R⁵, independently of one another, are H, -CH₃ or mixtures thereof. Very advantageously, R² and R⁵ are mixtures of H and -CH₃. Preference in that case is given to mixtures with 40 - 60 mol% H and 40 - 60 mol% -CH₃. If structural subunits **S3** and/or **S4** are present, this is also true, in particular, for R⁹ and R¹³;
c) R³ and R⁶ are H. If structural subunits **S3** and/or **S4** are present, this is also true, in particular, for R¹⁰ and/or R¹⁴;
d) R⁴ and R⁷, independently of one another, are H or -COOM, preferably H. If structural subunits **S3** and/or **S4** are present, this is also true, in particular, for R¹¹ and R¹⁵;
e) R⁸ is -[AO]ₙ-R^{a}, and preferably A is C₂ alkylene and/or R^{a} is H or a C₁ alkyl group. Advantageously n is 2 - 50, more particularly n is 5 - 40, preferably n is 20 - 30, especially n is 8 - 25. If structural subunit **S3** is present, this is also true, in particular, for R¹²;
f) m is 0 and p is 1.

The comb polymers used can be prepared in a conventional way.

A first process, also identified below as "polymer-analogous process", for preparing a comb polymer as described above comprises the following steps:
a) providing and/or preparing a base polymer **BP** comprising or consisting of a structural unit of the formula V 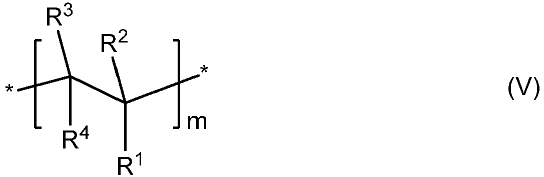 where
   M, R¹, R², R³, and R⁴ are as defined above, with R¹ being more particularly - COOM, and
   m > 2, more particularly m = 20 - 100;
b) esterifying the base polymer **BP** with a compound of the formula VI

   HO-R⁸ (VI)
c) optionally amidating the base polymer **BP** with a compound of the formula VII

   H₂N-R¹² (VII)
d) optionally amidating and/or esterifying the base polymer **BP** with a compound of the formula VIII

   H-R¹⁶ (VIII)
to give the comb polymer **CP,**
where R⁸, R¹² and R¹⁶ are as defined above.

The base polymer **BP** in step a) is, in particular, a polyacrylic acid, a polymethacrylic acid and/or a copolymer of acrylic acid and methacrylic acid. A number-average molecular weight (Mₙ) of the base polymer **BP** of the formula (V) is, in particular, 500 - 20'000 g/mol, more particularly 500 - 10'000 g/mol, more preferably 3'000 - 6'000 g/mol.

Base polymers **BP** of this kind can be prepared in a conventional way from acrylic acid monomers and/or methacrylic acid monomers. It is also possible, for example, to use maleic acid monomers and/or maleic anhydride monomers, however. This may be advantageous from standpoints including those of economy and safety.

The base polymer **BP** is prepared in step a), in particular by aqueous radical polymerization, of acrylic acid and/or methacrylic acid, for example, in the presence of a radical initiator and/or of a chain transfer agent.

The radical initiator in step a) comprises, in particular, Na-, K- or ammonium peroxodisulfate. Likewise suitable as radical initiator in step a) is, for example, a redox couple based on H₂O₂ / Fe²⁺.

The chain transfer agent in step a) is preferably an alkali metal sulfite or hydrogen sulfite. Likewise advantageous is a phosphinic acid derivative. The chain transfer agent in step a) may also be an organic compound which contains a thiol group.

Corresponding base polymers **BP** may in principle also be obtained commercially, from various suppliers.

Among the compounds which can be added for the esterification in step b) are acids and/or bases - as catalysts, for example. The esterification takes place advantageously at elevated temperatures of 120 - 200°C, more particularly 160 - 180°C. By this means it is possible to improve the yield significantly.

The compounds of the formulae V, VI and VII that are used in step b) are available commercially from various suppliers.

A second process, also identified below as "copolymerization process", for preparing a comb polymer as described above comprises a copolymerization of:
a) a mole fractions of monomers **M1** of the formula IX 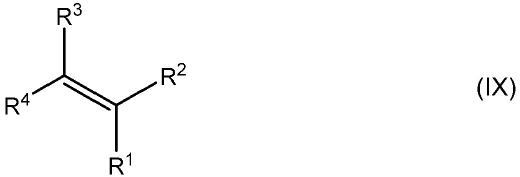
b) b mole fractions of monomers **M2** of the formula X 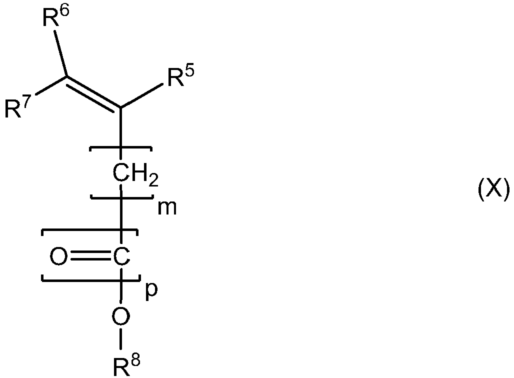
c) optionally c mole fractions of monomers **M3** of the formula XI 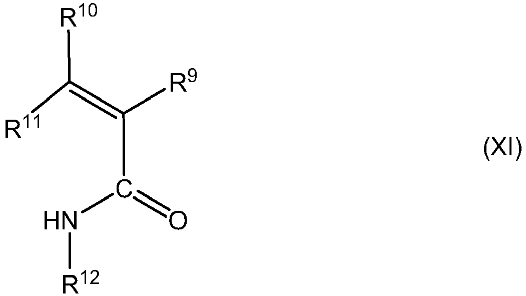
d) optionally d mole fractions of monomers **M4** of the formula XII 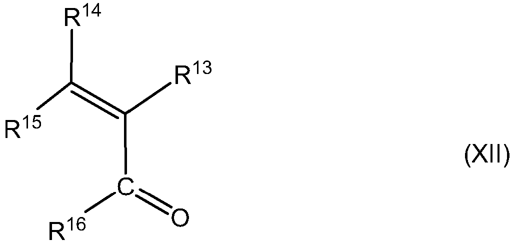
where a, b, c and d represent the mole fractions of the respective monomers **M1, M2, M3,** and **M4,**
where a, b, c, d, M, R¹ - R¹⁶, m, and p are as defined above.

The monomers **M2, M3,** and **M4** may be prepared in a conventional way by esterification or amidation of acrylic acid, methacrylic acid, maleic acid and/or maleic anhydride with compounds of the formulae VI, VII or VIII (see above).

For the copolymerization or the second process it is possible to use the radical initiators and/or chain transfer agents already stated above in connection with the fist processs.

Further details on the polymer-analogous reaction are disclosed, for example, in EP 1 138 697 B1 on page 7, line 20 to page 8, line 50 as well as in its examples, or in EP 1 061 089 B1 on page 4, line 54 to page 5, line 38 as well as in its examples. In a variation thereof, as described in EP 1 348 729 A1 on page 3 to page 5 as well as in its examples, the comb polymer can be produced in the solid state. The disclosure of these mentioned patent specifications is thus included herewith, in particular by reference. The production by polymer-analogous reaction is preferred.

Corresponding comb polymers are commercially available and marketed by Sika Schweiz AG under the trade name ViscoCrete^{®}.

### Second Polymer:

Additionally, the dispersant according to the invention comprises at least one second polymer, which is a condensate of at least an aromatic compound with formaldehyde, or is a lignosulfonate. As the first polymer, the second polymer preferably is a dispersant for a hydraulically binding composition, preferably a fluidizer. Such compounds are also referred to as "high water reducers". Condensates of aromatic compounds with formaldehyde, as well as lignosulfonates, are known dispersants or fluidizers for hydraulically binding compositions. Typically, they confer a water reduction of about 10% to 20% to a hydraulically binding composition, specifically cement.

As used herein, a "condensate" is a compound, which was obtained by at least one condensation reaction. Typically, the synthesis of such condensates comprises a subsequent polymerisation step from condensate precursor units. Since the condensation reaction yields condensates of multiple monomeric precursors, the overall reaction is a polymerization reaction and the condensate is a polymer. As used herein, a "polymer" is obtained by polymerization, but may comprise only a low number of monomeric units, such as 2 or 3 monomeric units.

In a preferred embodiment of the invention, the second polymer is a sulfonate. Sulfonates are anions with the general formula R-SO₂O⁻, wherein R is an organic residue, such as methyl or phenyl. Sulfonates are the conjugate bases of sulfonic acids with formula RSO₂OH.

Specifically, the second polymer is a melamine sulfonate, naphthalene sulfonate or lignin sulfonate. Preferably, it is a melamine sulfonate formaldehyde condensate, a naphthalene sulfonate formaldehyde condensate, or a lignosulfonate. The condensates may comprise additional chemical moieties which were included by condensation, or other modifications.

It is especially preferred that the second polymer is a melamine-sulfonate-formaldehyde condensate. Preferably, the condensate comprises between about 2 to 50, more preferably between about 3 to 20 melamine subunits. Preferably, the second polymer is a linear polymer. Specifically, the melamine subunits are aligned in a linear molecular chain. The condensate may be synthesized in a multiple step reaction, in which at first melamine is reacted with formaldehyde and pyrosulfite, and subsequently sulfonated with sulfanilic acid, to obtain a primary condensate. The primary condensate is of relatively small size and may comprise an average of about two melamines per molecule. Subsequently, the primary condensates can be polymerized to obtain a condensate of desired length. Melamine-sulfonate-formaldehyde condensates are known dispersants for cement compositions. Such condensates are commercially available, for example under the trademark Sikament from Sika (Switzerland).

In another embodiment of the invention, the second polymer is a naphthalene sulfonate formaldehyde condensate. Similar as described above for the melamine condensate, the naphthalene condensate is obtained from formaldehyde and naphthalene and sulfonated in order to introduce a desired amount of sulfonic groups. Such naphthalene sulfonates are also known dispersants for hydraulically binding compositions, specifically as fluidizers.

In another embodiment of the invention, the second polymer is a lignosulfonate. Lignosulfonates are water-soluble anionic polymers, which are by-products from the production of wood pulp. They are also used as dispersants and fluidizers for hydraulically binding compositions.

In a preferred embodiment of the invention, the average molecular weight (Mw) of the condensate is 1'000 - 50'000 g/mol, in particular 2'000 - 10'000 g/mol.

The condensate is in the form of a salt (with neutralized carboxyl groups), a free acid, or partially neutralized. Preferably, the condensate is neutralized or at least partially neutralized, because the solubility in aqueous solution is higher and ionic carboxyl groups are advantageous for the dispersant function.

In a specific embodiment, the second polymer is not phosphatized. More specifically, the second polymer is preferably not a polycondensation product containing (I) at least one structural unit with an aromatic or heteroaromatic sub-unit and at least one polyether side chain, and (II) at least one phosphated structural unit with an aromatic or heteroaromatic sub-unit.

Still more specifically, the second polymer preferably is not a phosphatized polycondensate according to WO2011/029711, claim 1, b). In this embodiment, the second polymer is thus preferably not a polycondensation product containing (I) at least one structural unit with an aromatic or heteroaromatic sub-unit and at least one polyether side chain, and (II) at least one phosphated structural unit with an aromatic or heteroaromatic sub-unit, and (III) at least one structural unit with an aromatic or heteroaromatic sub-unit; structural unit (II) and structural unit (III) differing exclusively in that the OP(OH)₂ group of the structural unit (II) is replaced by H in structural unit (III), and structural unit (III) is not the same as structural unit (I).

### Dispersant:

In a preferred embodiment of the invention, the dispersant of the invention comprises
i. 5 to 95 wt.%, preferably 15 to 75 wt.%, first polymers and
ii. 5 to 95 wt.%, preferably 15 to 75 wt.%, second polymers,
wherein the total amount of polymers i. and ii. is at least 80 wt.% or at least 90wt.%, preferably at least 95 wt.%, with respect to the total weight of the dispersant.

In another preferred embodiment of the invention, the solid dispersant of the invention comprises
i. at least 10 wt.%, preferably at least 20 wt.%, first polymers and
ii. at least 10 wt.%, preferably at least 20 wt.%, second polymers,
wherein the total amount of polymers i. and ii. is at least 80 wt.% or at least 90 wt.%, preferably at least 95 wt.%, with respect to the total weight of the dispersant.

According to an especially preferred embodiment, an amount of first polymer is 40 - 60 wt.% and amount of second polymer is 40 - 60 wt.%, wherein the total amount of polymers i. and ii. is at least 80 wt.% or at least 90 wt.%, preferably at least 95 wt.%, with respect to the total weight of the dispersant.

According to another preferred embodiment, an amount of first polymer is 20 - 40 wt.% and amount of second polymer is 60 - 80 wt.%, wherein the total amount of polymers i. and ii. is at least 80 wt.% or at least 90 wt.%, preferably at least 95 wt.%, with respect to the total weight of the dispersant.

Especially a weight ratio of the first polymer to the second polymer is between 2 to 1 and 1 to 2, more preferably between 1.5 to 1 and 1 to 1.5, or between 1.2 to 1 and 1 to 1.2. In a specific preferred embodiment, the ratio is about 1 to 1.

In preferred embodiments of the invention, the dispersant is a powder. The powder may be converted into another solid forms, for example by pressing. Thus the inventive solid dispersant may also be a granulate, a shaped block, a tab or the like.

Preferably, the solid dispersant is in the form of a fine powder. Preferably, the overall particle size of the dispersant, in particular of at least 98% of the particles, is below 700 µm, preferably below 500 µm, or more preferably below 250 µm. The particle size can be measured by laser diffraction, preferably with a Mastersizer 2000 device (trademark of Malvern Instruments Ltd, GB).

In a preferred embodiment, the average particle size (d50%) of the dispersant is between 40 µm and 100 µm, more preferably between 60 µm and 80 µm.

Preferably, the pH of the dispersant is between 5 and 9, more preferably between 6 and 8, for example about 7 (measured in 4% (w/w) aqueous solution). In comparison, dried PCE products have pH values between 3 and 4. For example, dry PCEs available under the trademark Viscocrete 125 or 225 from Sika, CH, have pH values of about 3.8 and 3.2. The neutral pH is expected to confer to the polymer an increased long time storage stability

### Spray-dried dispersants:

Preferably, the dispersant as used in the invention is obtained by:
a) providing the first polymer,
b) providing the second polymer,
c) preparing an aqueous solution comprising the first and the second polymer and
d) spray-drying the aqueous solution to obtain the dispersant, especially in solid form.

By spray drying, a very fine powder as described above is obtained easily. The spray dried powder as produced with thus method has a unique microstructure, which is distinct from that of conventionally dried polymers and confers advantageous properties to the powder. Also, such spray-dried powders are structurally distinct from simple mixtures of first polymers and second polymers that have not been spray-dried together. This is for example shown in example 12, page 22 of WO 2013/020862 A1.

In addition, spray dried particles have a relatively low density. Specifically, they tend to have a relatively low density in the interior and outer sections of relatively higher density. Spray dried particles thus resemble "hollow spheres" to a certain extent. For example, the overall bulk density of the inventive dispersant is between 0.4 and 0.75, specifically between 0.5 and 0.7. In comparison, the bulk density of Sika ViscoCrete^{®} 111 is about 0.78 and of Sika ViscoCerete^{®} 125 is about 0.81. The bulk density is in particular given in g/cm³ and can be measured manually or automatically, preferable until constant values are obtained. It is believed that the overall structure and small particles size mediate rapid and even dissolving in water, whereas aggregation and clumping are avoided.

According to the above described method, an aqueous solution is prepared, which comprises the first and second polymer. The solution may comprise two or more different first polymers and/or second polymers. If necessary the aqueous solution is mixed, for example stirred, until the comb polymers and condensates are dissolved. Since the salts of the comb polymer and condensate are anionic, they are soluble in water up to relatively high concentrations. The solution is a true solution, in which the comb polymer and condensate molecules are dissolved. Thus, the aqueous solution prepared in step c) of the invention is not a particle dispersion. In other words, it is not a latex. Specifically, the solution does not comprise insoluble particles, for example of thermoplastic polymers, such as particles above 1 µm or above 10 nm diameter.

In a subsequent step d), the aqueous solution is spray-dried. Spray-drying is a known method for producing a dry powder from a liquid by spraying in combination with rapidly drying the solution with a hot gas. The process is carried out in a spray-dryer apparatus. The liquid is dispersed with a spray nozzle or an atomizer.

Preferably, the aqueous solution is pre-heated before entering the spray dryer. The spray-drying may be carried out at an inlet temperature between 100 and 300°C, preferably between 150 and 250°C. The outlet temperature may be between 80 and 200°C, more preferably between 120 and 150°C. The resulting powder product may be sieved in order to remove small agglomerates, which might potentially be formed. Accordingly, a dry and fine powder is obtained, which has a good flowability.

In a preferred embodiment, the aqueous solution of the first and the second polymer, before spray-drying, comprises with respect to the total weight of the aqueous solution:
i. 5 to 60 wt.%, preferably 10 to 30 wt.%, first polymers,
ii. 5 to 60 wt.%, preferably 10 to 30 wt.%, second polymers, and
iii. 20 to 80 wt.%, preferably 40 to 80 wt.%, water.

The aqueous solution may comprise other soluble additives. Usually, solutions of the respective comb polymers and condensates comprise small amounts of additives. Additives may be residual chemicals or side products from the production process, or substances which stabilize comb polymer solutions. For example, the additives might be salts, especially buffer salts, alcohols, polysaccharides or sulfonate salts. The additives might be functional additives, such as antifoaming agents or colorants. Preferably, the content of solid additives is below 10 wt.%, more preferably below 5 wt.% or below 3 wt.%.

Preferably, the weight ratio (w/w) of the first polymer and the second polymer in the spray-dried aqueous solution is between 2 to 1 and 1 to 2, more preferably between 1.5 to 1 and 1 to 1.5, or between 1.2 to 1 and 1 to 1.2. In a specific preferred embodiment, the ratio is about 1 to 1 (about equal).

In a preferred embodiment, the pH of the spray-dried aqueous solution is between 5 and 9, more preferably between 6 and 8. The aqueous solution for spray-drying may be obtained by admixing a solution of the first polymer, having at a pH between 2 and 7, preferably between 3.5 and 6.5, with a solution of the second polymer, having a pH between 8 and 14, preferably between 10 and 13; without further adaptation of the pH prior to spray drying.

In a preferred embodiment, the aqueous solution for spray drying is prepared by mixing aqueous solutions of the first polymer and the second polymer. Preferably, the aqueous solution for spray-drying is prepared at a temperature between 15°C and 40°C, preferably at room temperature. Preferably, the aqueous solution is pre-heated before spray-drying, for example to a temperature between 50°C and 80°C.

In a specific embodiment, the spray-dried solution and/or the solid dispersant produced according to the inventive process do not comprise a phosphatized polycondensate. More specifically, the spray-dried solution and/or solid dispersant produced according to the inventive process preferably do not comprise a polycondensation product containing (I) at least one structural unit with an aromatic or heteroaromatic sub-unit and at least one polyether side chain, and (II) at least one phosphated structural unit with an aromatic or heteroaromatic sub-unit.

Still more specifically, the spray-dried solution and/or solid dispersant produced according to the inventive process do not comprise a phosphatized polycondensate according to WO2011/029711, claim 1, b). In this embodiment, the spray-dried solution and/or solid dispersant produced according to the inventive process preferably do not comprise not a polycondensation product containing (I) at least one structural unit with an aromatic or heteroaromatic sub-unit and at least one polyether side chain, and (II) at least one phosphated structural unit with an aromatic or heteroaromatic sub-unit, and (III) at least one structural unit with an aromatic or heteroaromatic sub-unit; structural unit (II) and structural unit (III) differing exclusively in that the OP(OH)₂ group of the structural unit (II) is replaced by H in structural unit (III), and structural unit (III) is not the same as structural unit (I).

Further details about suitable spray-dried dispersants are given in WO2013/020862 A1 (Sika Technology AG) which is incorporated herein by reference.

### Multi-component system:

In a preferred embodiment of the invention, the epoxy resin composition according to the invention is provided as a multi-component system. Thereby, the composition comprises two, three or more individual components. The components are stored separately, especially in order to avoid spontaneous reaction. However, the components may be assembled together as a package. For use, the components are combined with each other. When the components are mixed together, curing reactions begin so that the composition is to be processed within the open time after mixing the components.

Curable epoxy resin compositions are regularly provided to the user as multi-component systems. In this case, for example, the epoxy resin and a curing agent are regularly contained in different components, so that the curing reaction can take place only when the user mixes the components. The coated fillers may be part of one or both of these components or part of an extra (filler) component.

Thus, the invention also relates to an epoxy resin composition which is present as a multi-component system, in particular as a three-component system comprising or consisting of:
a) a binder component **K1** containing the at least one epoxy resin, and
b) a curing component **K2** containing least one curing agent, and
c) optionally a further component **K3,**
wherein the at least one inorganic filler and the dispersant is contained in the binder component **K1,** the curing component **K2** and/or in the optional further component **K3.**

Optionally, an additional curing agent can also be contained in the binder component **K1.** In this case it is preferably a latent curing agent. Latent curing agents only take effect after they are activated, in particular by catalysts or elevated temperature. When a latent curing agent is contained in component **K1,** then a catalyst may be used for the activation of the curing agent in component **K2.** Binder component **K1** typically does not contain non-latent curing agents.

The inorganic filler and dispersant are preferably contained in the same component **K1, K2** and/or **K3.** Particularly preferred is a multi-component system in which the inorganic fillers and dispersant are contained in the further component **K3.**

Preferably, the multi-component system is a three-component system. According to the invention it has been found that such a multi-component system with at least three components ensures a particularly good durability of the individual components over extended periods of time. Particularly when the component **K1** is non-aqueous, it is preferred that the dispersant according to the invention is not contained in this component **K1,** as they are often insufficiently soluble in the more hydrophobic epoxy resins. It is generally preferred that the dispersant is contained in the further component **K3.**

Optionally however, one or more additional components may be included for specific purposes. For instance, an additional component comprising coloring agents such as pigments may be used for coloring purpose

In a preferred embodiment of the invention, the multi-component system according to the invention comprises a further component **K3,** which contains the filler, the dispersant and optionally a solvent. Here, the filler is preferably coated with the first polymer, the second polymer and/or the dispersant, in particular by impregnating with a solution or suspension including said first polymer, second polymer and/or dispersant, and said solvent. Preferably, the filler is coated with the dispersant, in particular by impregnating with a solution or suspension including said dispersant and said solvent.

The epoxy resin composition according to the invention and the multi-component system may contain other conventional additives. Especially, these additives are chemically and/or structurally different from the first and the second polymer. A plurality of additives is well-known in the technical field of epoxy resins that influence the properties of the curable compositions or the cured epoxy resins. The proportion of additives in the epoxy resin composition which is contained in addition to epoxy resins, curing agents, dispersant and inorganic fillers, can be - including solvent - for example, up to 50 wt.%, up to 20 wt.%, up to 5 wt.%, or up to 2 wt.%. In a preferred embodiment of the invention, at least one further additive selected from reactive diluents, plasticizers, solvents, film-forming agents, extenders, catalysts, accelerators, polymers, rheology modifiers, adhesive promoters, stabilizers, defoamers, deaerating agents, flame retardants, surfactants, biocides, organic dyes and pigments and other dispersing agents is contained. These include, for example:
- Solvents, film-forming agents or extenders such as aromatic solvents such as toluene, xylene or benzyl alcohol, methyl ethyl ketone, 2-ethoxyethanol, 2-ethoxy-ethyl acetate, aliphatic alcohols such as ethanol, propanol or butanol, benzyl alcohol, phenols such as nonylphenol or nonylphenol ethoxylates, ethers or polyethers such as ethylene glycol, diethylene glycol butyl ether, dipropylene glycol butyl ether, ethylene glycol butyl ether, ethylene glycol phenyl ether, N-methylpyrrolidone, propylene glycol butyl ether, propylene glycol phenyl ether, diphenylmethane, diisopropylnaphthalene, petroleum fractions such as Solvesso types (from Exxon) such as Solvesso 200, aromatic hydrocarbon resins, in particular phenol group-containing types, sebacates, phthalates, mineral oil fractions, naphtha, aromatic naphtha, organic phosphoric and sulfonic esters, and sulfonamides;
- Polymers having functional groups, such as polyamides, polysulfides, polyvinyl formal (PVF), polyvinyl butyral (PVB), polyurethanes (PUR), polymers having carboxyl groups, polyamides, butadiene-acrylonitrile copolymers, styreneacrylonitrile copolymers, butadiene-styrene copolymers , homo- or copolymers of unsaturated monomers, particularly from the group comprising ethylene, propylene, butylene, isobutylene, isoprene, vinyl acetate and alkyl (meth)acrylates, in particular chlorosulfonated polyethylenes and fluorine-containing polymers, sulfonamide-modified melamines and purified montan waxes;
- organic dyes;
- accelerators, which accelerate the reaction between amino groups and epoxide groups, for example, acids or compounds hydrolyzable to form acids, for example organic carboxylic acids such as acetic acid, benzoic acid, salicylic acid, 2-nitrobenzoic acid, lactic acid, organic sulfonic acids such as methanesulfonic acid, p-toluenesulfonic acid or 4-dodecylbenzenesulfonic acid, sulfonic acid esters, other organic or inorganic acids such as phosphoric acid, or mixtures of the aforementioned acids and acid esters; furthermore tertiary amines such as 1,4-diazabicyclo[2.2.2]octane, benzyldimethylamine, α-methylbenzyldimethylamine, triethanolamine, dimethyl aminopropylamine, salts of such tertiary amines, quaternary ammonium salts such as benzyltrimethyl ammonium chloride, phenols, in particular bisphenols, phenolic resins and Mannich bases such as 2-(dimethylaminomethyl)-phenol and 2,4,6-tris-(dimethylaminomethyl)-phenol, phosphites such as di- and triphenyl phosphites, and mercapto group-containing compounds such as those already mentioned above; catalysts;
- rheology modifiers such as in particular thickening agents, for example layer silicates such as bentonites, derivatives of castor oil, hydrogenated castor oil, polyamides, polyurethanes, urea compounds, fumed silicas, cellulose ethers and hydrophobically modified polyoxyethylenes;
- adhesion promoters, for example, organoalkoxysilanes such as 3-glycidoxypropyl trimethoxysilane, 3-aminopropyl-trimethoxysilane, N-(2-aminoethyl)-3-aminopropyl-trimethoxysilane, N-(2-aminoethyl)-N'-[3-(trimethoxysilyl)-propyl]-ethylene diamine, 3-ureidopropyl trimethoxysilane, 3-chloropropyl trimethoxysilane, vinyl trimethoxysilane, or the corresponding organosilanes with ethoxy groups or (poly) etheroxy groups instead of the methoxy groups;
- stabilizers against oxidation, heat, light and UV radiation;
- flame retardants, in particular compounds such as aluminum hydroxide (Al(OH)₃; also referred to as ATH for "aluminum trihydrate"), magnesium hydroxide (Mg(OH)_{2;} also referred to as MDH for "magnesium dihydrate"), ammonium sulfate ((NH)₂SO₄) boric acid (B(OH)₃₎, zinc borate, melamine borate and melamine cyanurate; phosphorus-containing compounds such as ammonium phosphate ((NH₄)₃PO₄), ammonium polyphosphate, melamine phosphate, melamine pyrophosphate, triphenyl phosphate, diphenyl cresyl phosphate, tricresyl phosphate, triethyl phosphate, tris-(2-ethylhexyl) phosphate, trioctyl phosphate, mono-, bis- and tris-(isopropylphenyl) phosphate, resorcinol-bis-(diphenyl phosphate), resorcinol diphosphate oligomer, tetraphenyl-resorcinol diphosphate, ethylenediamine diphosphate and bisphenol A-bis-(diphenyl phosphate); halogen-containing compounds such as chloroalkyl phosphates, in particular tris-(chloroethyl) phosphate, tris-(chloropropyl) phosphate and tris-(dichloroisopropyl) phosphate, polybrominated diphenyl ethers, in particular decabromodiphenyl ether, polybrominated diphenyl oxide, tris-[3-bromo-2,2-bis-(bromomethyl)-propyl] phosphate, tetrabromo-bisphenol A, bis-(2,3-dibromopropyl ether) of bisphenol A, brominated epoxy resins, ethylene-bis-(tetrabromophthalimide), ethylene-bis-(dibromonorbornane-dicarboximide), 1,2-bis-(tribromophenoxy) ethane, tris-(2,3-dibromopropyl) isocyanurate, tribromophenol, hexabromocyclododecane, bis-(hexachlorocyclopentadieno) cyclooctane and chlorinated paraffins;
- surfactants such as wetting agents, leveling agents, deaerating agents or defoamers;
- additional fillers such as organic fillers such as organic polymers, e.g., as a powder or hollow beads such as PVC powder or hollow PVC-beads; plastic fibers or natural fibers, or other inorganic fillers, which are not coated with polycarboxylate ethers, for example, fly ashes, carbon black, graphite, titanates, metal powders such as aluminum, copper, iron, silver or steel;
- biocides such as algicides, fungicides or fungal growth inhibitors;
- further dispersing agents and liquefiers different from polycarboxylate ethers such as surfactants, phosphate esters with long-chain polyether components, lignin sulfonates, melamine-formaldehyde sulfonates or naphthalene-formaldehyde sulfonates. The uniform distribution of the fillers in the epoxy composition can be improved in individual cases if other dispersing agents are included.

The dispersant is preferably used in an amount of 0.01 to 2 wt.%, more preferably 0.02 to 1 wt.%, even more preferably 0.1 to 0.5 wt.% dispersant, based on the weight of the filler. The dispersant can be added to the filler separately or premixed as a dispersing agent in solid or liquid form. The dispersant is preferably used in dissolved form or as a suspension.

The proportion of the dispersant in the epoxy resin composition is preferably less than 2 wt.%, preferably less than 1 wt.%, even more preferably less than 0.5 wt.%, based on the weight of the epoxy resin composition. The dispersant is preferably used in an amount of 0.01 to 2 wt.%, preferably 0.01 to 1 wt.%, even more preferably 0.05 to 0.5 wt.% dispersant, based on the weight of the epoxy resin composition.

In a preferred embodiment of the invention, the multi-component system comprises or consists of:
a) one binder component **K1** containing at least one epoxy resin, preferably containing, with respect to the total weight of binder component **K1:**
   i. 40 - 100 wt.%, in particular 60 - 90 wt.% epoxy resin,
   ii. and optionally 5 - 40 wt.% reactive diluent;
b) one curing component **K2** containing at least one curing agent, preferably containing, with respect to the total weight of curing component **K2:**
   i. 40 - 100 wt.%, in particular 75 - 100 wt.% or 95 - 100 wt.% or 100 wt.% of a curing agent;
c) one further component **K3,** which is preferably solid and contains:
   i. 93 to 99.99 wt.%, preferably 96 to 99.88 wt.%, even more preferably 98 to 99.7 wt.% inorganic fillers,
   ii. 0.01 to 2 wt.%, preferably 0.02 to 1 wt.%, even more preferably 0.1 to 0.5 wt.% dispersant, whereby preferably, a weight ratio of the first polymer to the second polymer is between 2 to 1 and 1 to 2, more preferably between 1.5 to 1 and 1 to 1.5, or between 1.2 to 1 and 1 to 1.2. In a specific preferred embodiment, the ratio is about 1 to 1, and
   iii. 0.02 to 5 wt.%, preferably 0.1 to 2.5 wt.%, even more preferably 0.2 to 1.5 wt.% solvent.

The epoxy resin-containing binder component **K1** may additionally contain compatible additives such as reactive diluents, solvents and/or plasticizers. Such additives are usually used in order to lower the viscosity and thus improve the workability.

According to the invention, the curing agent-containing curing component **K2** can consist solely of one or a mixture of various curing agents. The curing component **K2** may additionally contain other suitable and compatible additives such as catalysts or plasticizers. This is particularly advantageous if the curing agent is liquid at room temperature.

The further component **K3** is preferably in powder form, and preferably free-flowing.

Especially, an intended mixing ratio of binder component **K1** : curing component **K2** : further component **K3** is equal to (0.5 to 10) : 1 : (20 to 50), preferably (2 to 5) : 1 : (30 - 40) or 3 : 1 : 34.

The invention also relates to a cured epoxy resin, that is, a cured plastic material, obtainable by curing an epoxy composition according to the invention or by mixing the components and curing a multi-component system according to the invention. The term "epoxy resin" as used herein, in accordance with the common parlance, refers to the cured composition, in which the other ingredients, such as fillers, are integrated. The epoxy resin is cured if no substantial further reaction takes place between the epoxide groups and the curing agent. The cured epoxy resin having a solid consistency may be, for example, a three-dimensional object or component, a coating, a bonding bridge, a putty, a constituent of a laminate, an adhesive, a filling or sealant. Preferably, the filler is uniformly or substantially uniformly distributed in the cured resin.

The cured epoxy resin is structurally different from known epoxy resins and has advantageous properties. With the method according to the invention large amounts of inorganic fillers can be incorporated evenly despite good workability without compromising stability. Because of the high solids content such solids exhibit particularly low shrinkage and a low coefficient of thermal expansion. Preferably, therefore, the cured epoxy resin has a high content of inorganic fillers.

### Solid Filler:

A solid filler comprising a first polymer, a second polymer and/or a dispersant according to the invention as defined above preferably is coated with a first polymer, a second polymer and/or a dispersant.

Especially the solid filler comprises:
i. 93 to 99.99 wt.%, preferably 96 to 99.88 wt.%, even more preferably 98 to 99.7 wt.% inorganic fillers,
ii. 0.01 to 2 wt.%, preferably 0.02 to 1 wt.%, even more preferably 0.1 to 0.5 wt.% dispersant, whereby preferably, a weight ratio of the first polymer to the second polymer is between 2 to 1 and 1 to 2, more preferably between 1.5 to 1 and 1 to 1.5, or between 1.2 to 1 and 1 to 1.2. In a specific preferred embodiment, the ratio is about 1 to 1,and
iii. 0.02 to 5 wt.%, preferably 0.1 to 2.5 wt.%, even more preferably 0.2 to 1.5 wt.% organic solvent.

In this case, the sum of the fillers, dispersants and organic solvents is preferably 100%. The solid filler is suitable for use as further component **K3** for a multi-component system according to the invention. The filler coated with dispersant can however, also be incorporated as a filler in binder component **K1** and/or curing component **K2.**

### Method for producing curable epoxy resin compositions:

Furthermore, the present invention is related to a method for producing a curable epoxy resin composition as defined above comprising the steps of adding at least one first polymer, which is a comb polymer having a polymer backbone comprising acid groups and side chains which are linked to the polymer backbone, and at least one second polymer, which is a condensate of, at least, an aromatic compound and formaldehyde or a lignosulfonate, to at least one epoxy resin and/or to at least one inorganic filler. Suitable polymers and beneficial procedurals steps and measures are described above.

Preferably, the first polymer and the second polymer is added in the form of a dispersant which is obtainable or obtained by preparing an aqueous solution comprising the first and the second polymer, and spray-drying the aqueous solution to obtain the dispersant, especially in solid form. Details about the spray-drying process are given above.

Thereby, even more preferred, the inorganic filler is coated with the first polymer, the second polymer and/or the dispersant.

In a preferred embodiment, the inorganic filler is first impregnated and/or wetted with a solvent, and subsequently the first polymer, the second polymer and/or the dispersant is added to and/or intermixed with the inorganic filler. Thereby, in particular, the first polymer, the second polymer and/or the dispersant is added to the inorganic filler in solid form, especially in powder form. Most preferably, a spray-dried dispersant as described above is used.

Also, the impregnation can be effected with a solution or suspension containing the first polymer, the second polymer and/or the dispersant and a solvent.

Beneficial measures for effecting the impregnation, suitable solvents and further additives are described above.

### Use of the dispersant:

A further aspect of the present invention is directed to a use of a dispersant according to the invention as a dispersing agent for inorganic fillers in curable epoxy resin compositions.

The dispersing agent may be used in particular as a liquefier to improve the workability and/or to improve the flowability of the curable epoxy resin compositions. In the use according to the invention the epoxy resins exhibit improved flowability. In the use according to the invention, both the flow rate and the flow distance are preferably improved. The flowability can be determined using the flow spread after 10 min, 20 min or 30 min, respectively, in each case after mixing of all components, including the curing agent and the epoxy resins. According to the invention it was surprising that dispersants according to the invention can develop a dispersing and liquefying action in non-aqueous epoxy resin compositions. This could not be expected, since the components of the dispersant, in particular the first and the second polymer, are usually used in cement compositions that are aqueous and also strongly basic, where the first and the second polymer are soluble in the matrix, and therefore differ significantly from curable epoxy resin compositions.

Preferably by the addition of the dispersant according to the invention, for example, in an amount of 0.05 wt.% or 0.1 wt.%, the flow spread or flowability of an epoxy resin composition immediately or after 1, 3, 5, 10 or 30 min after the mixing is increased by more than 2.5%, especially more than 5%, preferably more than 10% or more than 20%, compared to an identical composition without the dispersant. The flow spread or flowability can be determined as described in the exemplary embodiments and/or in in accordance with DIN EN 13395-1 or DIN EN 1015-3.

Furthermore, the inventive dispersant can be used for improving compressive strength, in particular the early compressive strength after 1 day, and/or for improving the flexural strength of curable epoxy resin compositions.

Preferably by the addition of the dispersant according to the invention, for example in an amount of 0.05 wt.% or 0.1 wt.%, the compressive strength after 1 day and/or the flexural strength of an epoxy resin composition is increased by more than 5%, especially more than 10%, in particular more than 15% or more than 20% when compared to an identical composition without an inventive dispersant. The compressive strength and the flexural strength can be determined as described in the exemplary embodiments.

The invention also relates to the use of an epoxy resin composition according to the invention or a multi-component system according to the invention for bonding, coating or sealing of substrates and/or for producing moldings. The multi-component system is used by mixing the components first, so that a curable epoxy resin composition according to the invention is obtained. After incorporating all components and optionally activation, curing takes place. Here, further components or additives may be added.

The invention is further explained in the following experimental part, which, however shall not be construed as limiting the scope of the invention. The proportions and percentage indicated are by weight, unless otherwise stated.

### Short description of figures

- Fig. 1: shows the effective bearing area of a comparative epoxy composition **CV1** (left) and an inventive epoxy composition **CE1** (right);
- Fig. 2: shows a view on top of a cured inventive epoxy composition **CE1** 15 days after preparation.

### Exemplary embodiments

### 1. Production of dispersants

The dispersants have been produced in line with WO 2013/020862 A1 (Sika Technology AG) which is incorporated herein by reference.

### 1.1 Production of a first solid dispersant D1

500 kg Sikament R-550C (trademark of Sika, CH), a polycarboxylate of comb class with a polyacrylic backbone and a PEG side chain combined by an ester, Mw about 21'500, 40% s.c., pH 5.5-6.5, was mixed with 500 kg Sikament FF-86 (trademark of Sika, CH), a sulfonated melamine formaldehyde (SMF) resin at 40% s.c., pH 10-13, at room temperature (25°C) in a conventional reactor of 1.5 m³ capacity with a paddle stirrer for 20 minutes until a homogenous mixture has been obtained. This mixture was slightly heated to 60°C to decrease viscosity and energy costs during spray drying. Spray drying was performed at 200°C inlet temperature and 120-150°C in outlet (using air heated). The resulting product passed through a sieve to separate eventually formed waxy or syrupy parts (< 1% w/w). The final spray-dried product can be stored within 25 kg coated bags for about 1 year.

### 1.2 Production of a second solid dispersant D2

200 kg Viscocrete PC-2 (trademark of Sika, CH;), a polycarboxylate and comb polymer with a polymethacrylic backbone and a PEG side chain attached by an ether bond, 50 % s.c., pH 3.5-5.5, was mixed with 800 kg Sikament FF-86, a sulfonated melamine formaldehyde (SMF) resin at 40% s.c., pH 10-13, at room temperature (25°C) in a conventional reactor of 1.5 m³ capacity with a paddle stirrer for 20 minutes until a homogenous mixture has been obtained. This mixture was slightly heated to 60°C to decrease viscosity and energy costs during spray drying. Spray drying was performed at 200°C inlet temperature and 120-150°C in outlet (using air heated). The final spray-dried product can be stored within 25 kg coated bags for about 1 year.

### 2. Production of epoxy resin composition

### 2.1 Inventive three-component epoxy resin composition E1

A three-component system was produced as the basis for an epoxy grout with the following components **K1, K2** and **K3:**

### Binder component K1 with epoxy resin:

| **Component** | **wt.%** |
|---|---|
| Bisphenol A-epichlorohydrin resins with average molecular weight >700 | 74.7 |
| Mixture of silicone-free defoamer, solvent naphtha and 2-methoxy-1-methylethylacetate | 0.3 |
| 1,6-Hexanediol diglycidyl ether | 25 |
| Total | 100 |

The epoxy resin was charged first. All other materials were added and homogenized for about 5 minutes.

### Curing component K2 with curing agent:

| **Component** | **wt.%** |
|---|---|
| Triethylenetetramine | 100 |

*Further component K3 with filler:*

| **Component** | **wt.%** |
|---|---|
| Quartz sand mixture | 79.5 |
| TiO₂ white pigment | 0.45 |
| Cement, particle size < 0.06 mm | 20 |
| Iron oxide black | 0.05 |
| Solution of dispersant **D1** (20 wt.% dispersant **D1** dissolved in 80 wt.% benzyl alcohol) | 1 |
| Total | 101 |

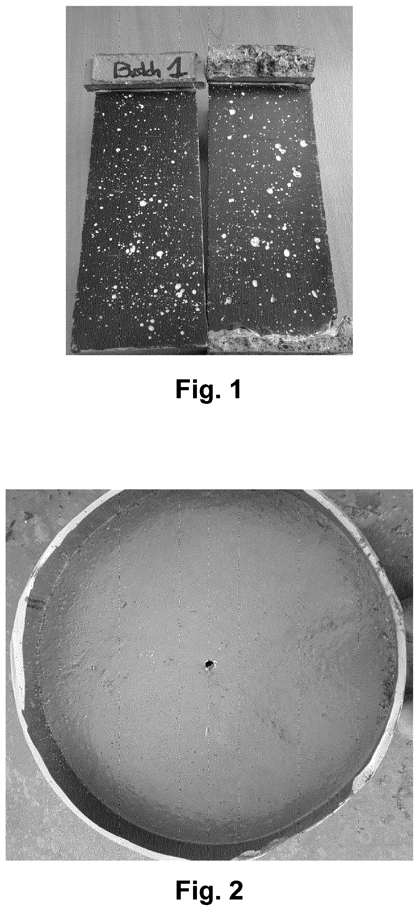

Component **K3** is composed of a mixture of different quartz sands with particle sizes in the range of 0.06 mm to 3.2 mm. The particle size distribution of the quartz sand mixture is shown in Figure 1. In addition, component **K3** contains cement as inorganic finely divided filler and a low proportion of titanium dioxide and iron oxide as pigments.

The fillers were successively weighed and placed in a stirred tank (the coarse fillers first, the finely divided fillers last). Then, the benzyl alcohol was added and mixed for about 5 minutes at RT. Subsequently, dispersant **D1** in powder form was added and mixed for another 5 minutes at RT. A Hobart planetary mixer N50 CE at level 1 was used as the stirring unit.

### 2.2 Comparative three-component epoxy resin composition V1

For reasons of comparison, a further three-component epoxy resin composition **V1** has been produced similar to the inventive three-component epoxy resin composition **E1.** However, instead of 1 wt.% of a solution of dispersant **D1**, a solution of 20 wt.% Sikament R-550C (trademark of Sika, CH) dissolved in 80 wt.% benzyl alcohol has been used in component **K3.**

### 3. Production of curable epoxy resin compositions CE1 and CV1

A curable epoxy composition **CE1** according to the invention was prepared by mixing components **K1, K2** and **K3** of the three-component epoxy composition **E1.** The mixing ratio of component **K1:K2:K3** was 6:1:35 parts by weight. The density of the prepared epoxy composition **CE1** was 2.346 g/cm³.

Similarly, a comparative curable epoxy composition **CV1** was prepared by mixing components of the comparative three-component epoxy composition **V1.** Also with the comparative curable epoxy composition **CV1** the mixing ratio of component **K1:K2:K3** was 6:1:35 parts by weight. The density of the prepared epoxy composition **CV1** was 2.299 g/cm³.

### 4. Properties of epoxy resin compositions

### 4.1 Flow behavior

The flowability of epoxy compositions **CE1** and **CV1** was determined using a brass cone (about 500 g epoxy resin mortar) in accordance with DIN EN 13395-1 or EN 1015-3 and the flow spread (diameter) was determined 5 minutes after mixing. For comparative curable epoxy composition **CV1** the flow spread was 204 mm. The flow spread for the curable epoxy composition **CE1** according to the invention was 210 mm, which is an improvement of about 3%.

### 4.2 Compressive strength

The compressive strengths of epoxy compositions **CE1** and **CV1** was determined in line with standard ASTM-C579 - 01 (2012) with cubic test specimens of 50 mm × 50 mm × 50 mm at 23°C. The following table gives an overview of the results:

| **Curing time** | **Compressive strength [N/mm²]** | |
|---|---|---|
| | **Composition CV1** | **Composition CE1** |
| 1 | 23.7 | 29.1 |
| 3 | 55.2 | 54.5 |
| 7 | 73.2 | 73.5 |
| 28 | 86 | 86 |

Remarkably, the early compressive strength after 1 day is clearly higher (+23%) for inventive composition **CE1** when compared with comparative composition **CV1.**

### 4.3 Flexural Strength

The flexural strengths of epoxy compositions **CE1** and **CV1** was determined in line with standard ASTM-C580 - 02 (2012) at 23°C. The following table gives an overview of the results:

| Curing time | Flexural strength [N/mm²] | |
|---|---|---|
| | Composition **CV1** | Composition **CE1** |
| 1 | 13.9 | 15.37 |
| 3 | 21.4 | 22.9 |
| 7 | 23.7 | 24.7 |
| 28 | 26.2 | 28.0 |

At all times (1 to 28 day), the flexural strength inventive composition **CE1** is significantly higher when compared with comparative composition **CV1.**

### 4.4 Further properties

Additionally, the effective bearing area according to ASTM C-1339 has been determined for both compositions **CE1** and **CV1.** For both systems the effective bearing area was found to be ≈ 97 % (see Fig. 1) and no segregation could be observed.

Optical inspection of the inventive epoxy composition **CE1** 15 days after mixing did not reveal any cracks or fissures (see Fig. 2).

Thus, these results clearly show that inventive dispersants can be used in order to improve flowability, early strength, and flexural strength of curable epoxy resin composition with high filler contents without affecting surface quality and effective bearing area.

## Claims

1. A curable epoxy resin composition comprising at least one epoxy resin, at least one inorganic filler and at least one dispersant, whereby the dispersant comprises:
a) at least one first polymer, which is a comb polymer having a polymer backbone comprising acid groups and side chains which are linked to the polymer backbone, and
b) at least one second polymer, which is a condensate of, at least, an aromatic compound and formaldehyde; or a lignosulfonate.

2. The epoxy resin composition according to claim 1, wherein the inorganic filler is coated with the first polymer, the second polymer and/or the dispersant.

3. The epoxy resin composition according to at least one of the preceding claims wherein the solvent is a polar organic solvent, in particular an ester, ether and/or alcohol, especially preferred, the solvent is benzyl alcohol, propylene carbonate, phenoxyethanol and/or glycol ether, whereby benzyl alcohol is in particular beneficial.

4. The epoxy resin composition according to at least one of the preceding claims whereby, the comb polymer comprises or consists of the following structural subunits:
a) a mole fractions of a structural subunit S1 of the formula (I) 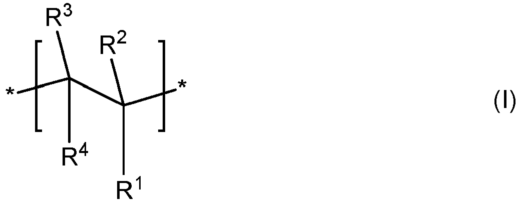
b) b mole fractions of a structural subunit S2 of the formula (II) 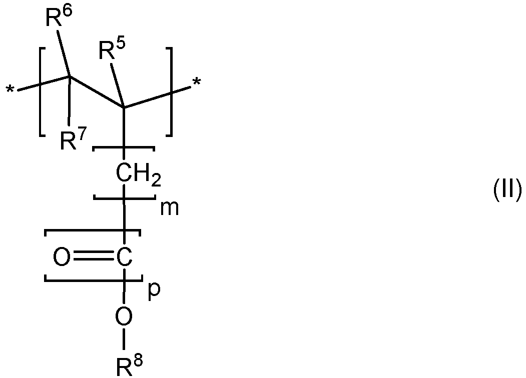
c) optionally c mole fractions of a structural subunit S3 of the formula (III) 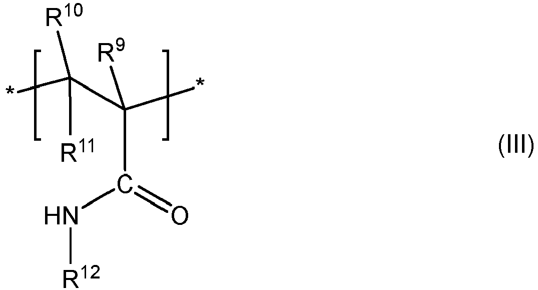
d) optionally d mole fractions of a structural subunit S4 of the formula (IV) 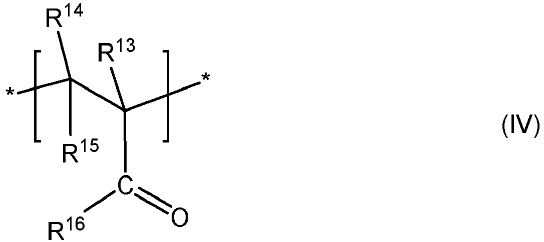 where
R¹, in each case independently of any other, is -COOM, -SO₂-OM, -O-PO(OM)₂ and/or -PO(OM)₂,
R², R³, R⁵, R⁶, R⁹, R¹⁰, R¹³ and R¹⁴, in each case independently of one another, are H or an alkyl group having 1 to 5 carbon atoms,
R⁴, R⁷, R¹¹ and R¹⁵, in each case independently of one another, are H, -COOM or an alkyl group having 1 to 5 carbon atoms,
M, independently of any other, is H⁺, an alkali metal ion, an alkaline earth metal ion, a di- or trivalent metal ion, an ammonium ion or an organic ammonium group,
m is 0, 1 or 2,
p is 0 or 1,
R⁸ and R¹², in each case independently of one another, are a C₁ to C₂₀ alkyl, cycloalkyl or alkylaryl group or are a group of the formula -[AO]ₙ-R^{a},
where A is C₂ to C₄ alkylene, R^{a} is H, a C₁ to C₂₀ alkyl, cyclohexyl or alkylaryl group,
and n is 2 - 250,
R¹⁶, independently of any other, is NH₂, -NR^{b}R^{c} or -OR^{d}NR^{e}R^{f,} where R^{b} and R^{c}, independently of one another, are
a C₁ to C₂₀ alkyl, cycloalkyl, alkylaryl or aryl group,
or are a hydroxyalkyl group or are an acetoxyethyl (CH₃-CO-O-CH₂-CH₂-) or a hydroxyisopropyl (HO-CH(CH₃)-CH₂-) or an acetoxyisopropyl (CH₃-CO-O-CH(CH₃)-CH₂-) group;
or R^{b} and R^{c} together form a ring of which the nitrogen is a part, in order to construct a morpholine or imidazoline ring;
R^{d} is a C₂-C₄ alkylene group,
R^{e} and R^{f} each independently of one another are a C₁ to C₂₀ alkyl, cycloalkyl, alkylaryl or aryl group or a hydroxyalkyl group,
and where a, b, c and d are mole fractions of the respective structural subunits **S1**, **S2**, **S3**, and **S4**, where a/b/c/d = (0.1 - 0.9) / (0.1 - 0.9) / (0 - 0.8) / (0 - 0.8), more particularly a/b/c/d = (0.3 - 0.7) / (0.2 - 0.7) / (0 - 0.6) / (0 - 0.4), preferably a/b/c/d = (0.4 - 0.7) / (0.3 - 0.6) / (0.001 - 0.005) / 0, and with the proviso that a + b + c + d is 1.

5. The epoxy resin composition according to at least one of the preceding claims wherein the second polymer is a melamine sulfonate formaldehyde condensate, a naphthalene sulfonate formaldehyde condensate, or a lignosulfonate, especially a melamine-sulfonate-formaldehyde condensate.

6. The epoxy resin composition according to at least one of the preceding claims whereby a weight ratio of the first polymer to the second polymer is between 2 to 1 and 1 to 2, more preferably between 1.5 to 1 and 1 to 1.5, or between 1.2 to 1 and 1 to 1.2. In a specific preferred embodiment, the ratio is about 1 to 1.

7. The curable epoxy resin composition according to at least one of the preceding claims whereby the dispersant is obtained by:
a) providing the first polymer,
b) providing the second polymer,
c) preparing an aqueous solution comprising the first and the second polymer and
d) spray-drying the aqueous solution to obtain the dispersant, especially in solid form.

8. The epoxy resin composition according to at least one of the preceding claims, additionally comprising at least one curing agent and/or at least one reactive diluent.

9. The epoxy resin composition according to at least one of the preceding claims, whereby the composition is present as a multi-component system, in particular a three-component system comprising or consisting of:
a) a binder component **K1** containing the at least one epoxy resin, and
b) a curing component **K2** containing at least one curing agent, and
c) optionally a further component **K3,**
wherein the at least one inorganic filler is contained in the binder component **K1,** the curing component **K2** and/or in the further component **K3.**

10. A cured epoxy resin obtainable by curing an epoxy resin composition according to at least one of claims 1 to 8 or by mixing the components and curing a multi-component system according claims 9.

11. A method for producing a curable epoxy resin composition according to at least one of the preceding claims, comprising the steps of adding at least one first polymer, which is a comb polymer having a polymer backbone comprising acid groups and side chains which are linked to the polymer backbone, and at least one second polymer, which is a condensate of, at least, an aromatic compound and formaldehyde or a lignosulfonate, to at least one epoxy resin and/or to at least one inorganic filler.

12. The method according to claim 11, whereby the first polymer and the second polymer is added in the form of a dispersant which is obtainable or obtained by preparing an aqueous solution comprising the first and the second polymer, and spray-drying the aqueous solution to obtain the dispersant, especially in solid form.

13. The method according to at least one of claims 11 - 12, wherein the inorganic filler is coated with the first polymer, the second polymer and/or the dispersant, whereby the inorganic filler is first impregnated and/or wetted with a solvent, and subsequently the first polymer, the second polymer and/or the dispersant is added to and/or intermixed with the inorganic filler.

14. A use of a dispersant as defined in at least one of preceding claims (i) as a dispersing agent for inorganic fillers in curable epoxy resin compositions, (ii) for improving compressive strength, in particular the early compressive strength after 1 day, of curable epoxy resin compositions and/or (iii) for improving the flexural strength of curable epoxy resin compositions.

## Patentansprüche

1. Härtbare Epoxidharzzusammensetzung, umfassend mindestens ein Epoxidharz, mindestens einen anorganischen Füllstoff und mindestens ein Dispergiermittel, wobei das Dispergiermittel Folgendes umfasst:
a) mindestens ein erstes Polymer, bei dem es sich um ein Kammpolymer mit einer Polymerhauptkette mit Säuregruppen und an die Polymerhauptkette gebundenen Seitenketten handelt, und
b) mindestens ein zweites Polymer, bei dem es sich um ein Kondensat von mindestens einer aromatischen Verbindung und Formaldehyd oder ein Lignosulfonat handelt.

2. Epoxidharzzusammensetzung nach Anspruch 1, wobei der anorganische Füllstoff mit dem ersten Polymer, dem zweiten Polymer und/oder dem Dispergiermittel beschichtet ist.

3. Epoxidharzzusammensetzung nach mindestens einem der vorhergehenden Ansprüche, wobei es sich bei dem Lösungsmittel um ein polares organisches Lösungsmittel, insbesondere einen Ester, Ether und/oder Alkohol handelt, es sich bei dem Lösungsmittel besonders bevorzugt um Benzylalkohol, Propylencarbonat, Phenoxyethanol und/oder Glykolether handelt, wobei Benzylalkohol besonders vorteilhaft ist.

4. Epoxidharzzusammensetzung nach mindestens einem der vorhergehenden Ansprüche, wobei das Kammpolymer die folgenden Teilstruktureinheiten umfasst oder daraus besteht:
a) a Molanteile einer Teilstruktureinheit **S1** der 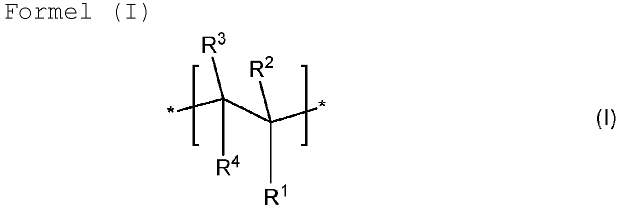
b) b Molanteile einer Teilstruktureinheit **S2** der 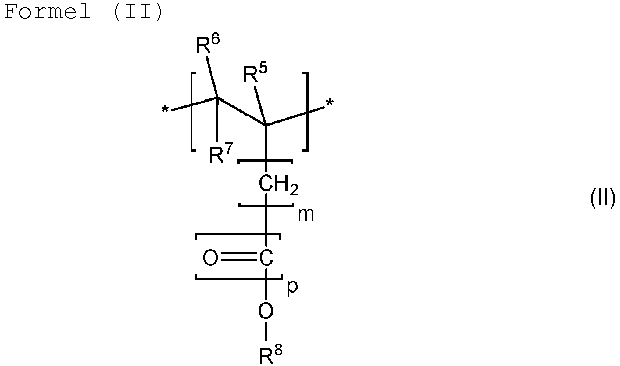
c) gegebenenfalls c Molanteile einer Teilstruktureinheit **S3** der Formel (III) 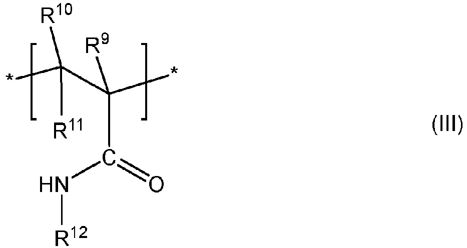
d) gegebenenfalls d Molanteile einer Teilstruktureinheit **S4** der Formel (IV) 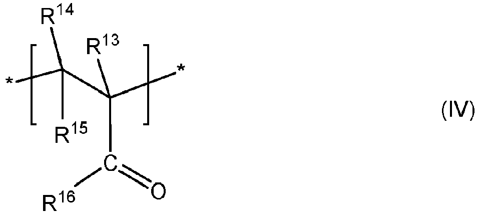 wobei
R¹ jeweils unabhängig voneinander für -COOM, -SO₂-OM, -O-PO(OM)₂ und/oder -PO(OM)₂ steht,
R², R³, R⁵, R⁶, R⁹, R¹⁰, R¹³ und R¹⁴ jeweils unabhängig voneinander für H oder eine Alkylgruppe mit 1 bis 5 Kohlenstoffatomen stehen, R⁴, R⁷, R¹¹ und R¹⁵ jeweils unabhängig voneinander für H, -COOM oder eine Alkylgruppe mit 1 bis 5 Kohlenstoffatomen stehen,
M unabhängig voneinander für H⁺, ein Alkalimetallion, ein Erdalkalimetallion, ein zwei- oder dreiwertiges Metallion, ein Ammoniumion oder eine organische Ammoniumgruppe steht,
m gleich 0, 1 oder 2 ist,
p gleich 0 oder 1 ist,
R⁸ und R¹² jeweils unabhängig voneinander für eine C₁- bis C₂₀-Alkyl-, Cycloalkyl- oder Alkylarylgruppe oder für eine Gruppe der Formel -[AO]ₙ-R^{a} stehen,
wobei A für C₂- bis C₄-Alkylen steht, R^{a} für H, eine C₁- bis C₂₀-Alkyl-, Cycloalkyl- oder Alkylarylgruppe steht,
und n gleich 2 bis 250 ist,
R¹⁶ unabhängig voneinander für NH₂, -NR^{b}R^{c} oder -OR^{d}NR^{e}R^{f} steht, wobei R^{b} und R^{c} unabhängig voneinander für eine C₁- bis C₂₀-Alkyl-, Cycloalkyl-, Alkylaryl- oder Arylgruppe oder für eine Hydroxyalkylgruppe oder für eine Acetoxyethylgruppe (CH₃-CO-O-CH₂-CH₂-) oder eine Hydroxyisopropylgruppe (HO-CH(CH₃)-CH₂-) oder eine Acetoxyisopropylgruppe (CH₃-CO-O-CH (CH₃)-CH₂-) stehen;
oder R^{b} und R^{c} zusammen einen Ring bilden, von dem der Stickstoff ein Teil ist, um einen Morpholin- oder Imidazolinring aufzubauen;
R^{d} für eine C₂-C₄-Alkylengruppe steht,
R^{e} und R^{f} je unabhängig voneinander für eine C₁-bis C₂₀-Alkyl-, Cycloalkyl-, Alkylaryl- oder Arylgruppe oder eine Hydroxyalkylgruppe stehen,
und wobei a, b, c und d für Molanteile der jeweiligen Teilstruktureinheiten **S1**, **S2**, **S3** und **S4** stehen, wobei a/b/c/d = (0,1 - 0,9) / (0,1 - 0,9) / (0 - 0,8) / (0 - 0,8), insbesondere a/b/c/d = (0,3 - 0,7) / (0,2 - 0,7) / (0 - 0,6) / (0 - 0,4), bevorzugt a/b/c/d = (0,4 - 0,7) / (0,3 - 0,6) / (0,001 - 0,005) / 0, und mit der Maßgabe, dass a + b + c + d = 1 ist.

5. Epoxidharzzusammensetzung nach mindestens einem der vorhergehenden Ansprüche, wobei es sich bei dem zweiten Polymer um ein Melaminsulfonat-Formaldehyd-Kondensat, ein Naphthalinsulfonat-Formaldehyd-Kondensat oder ein Lignosulfonat, insbesondere ein Melaminsulfonat-Formaldehyd-Kondensat, handelt.

6. Epoxidharzzusammensetzung nach mindestens einem der vorhergehenden Ansprüche, wobei das Gewichtsverhältnis von erstem Polymer zu zweitem Polymer zwischen 2 zu 1 und 1 zu 2, weiter bevorzugt zwischen 1,5 zu 1 und 1 zu 1,5 oder zwischen 1,2 zu 1 und 1 zu 1,2 liegt und das Verhältnis in einer speziellen bevorzugten Ausführungsform etwa 1 zu 1 beträgt.

7. Epoxidharzzusammensetzung nach mindestens einem der vorhergehenden Ansprüche, wobei das Dispergiermittel erhalten wird durch:
a) Bereitstellen des ersten Polymers,
b) Bereitstellen des zweiten Polymers,
c) Herstellen einer wässrigen Lösung, die das erste und das zweite Polymer umfasst, und
d) Sprühtrocknen der wässrigen Lösung unter Erhalt des Dispergiermittels, insbesondere in fester Form.

8. Epoxidharzzusammensetzung nach mindestens einem der vorhergehenden Ansprüche, die zusätzlich mindestens ein Härtungsmittel und/oder mindestens ein reaktives Verdünnungsmittel umfasst.

9. Epoxidharzzusammensetzung nach mindestens einem der vorhergehenden Ansprüche, wobei die Zusammensetzung als Mehrkomponentensystem, insbesondere Dreikomponentensystem, vorliegt, das Folgendes umfasst oder daraus besteht:
a) einer Bindemittelkomponente **K1,** die mindestens ein Epoxidharz enthält, und
b) einer Härtungskomponente **K2,** die mindestens ein Härtungsmittel enthält, und
c) gegebenenfalls einer weiteren Komponente **K3,** wobei der mindestens eine anorganische Füllstoff in der Bindemittelkomponente **K1,** der Härtungskomponente **K2** und/oder in der weiteren Komponente **K3,** enthalten ist.

10. Gehärtetes Epoxidharz, das durch Härten einer Epoxidharzzusammensetzung nach mindestens einem der Ansprüche 1 bis 8 oder durch Mischen der Komponenten und Härten eines Mehrkomponentensystems nach Anspruch 9 erhältlich ist.

11. Verfahren zur Herstellung einer härtbaren Epoxidharzzusammensetzung nach mindestens einem der vorhergehenden Ansprüche, umfassend die Schritte des Zugebens mindestens eines ersten Polymers, bei dem es sich um ein Kammpolymer mit einer Polymerhauptkette mit Säuregruppen und an die Polymerhauptkette gebundenen Seitenketten handelt, und mindestens eines zweiten Polymers, bei dem es sich um ein Kondensat von mindestens einer aromatischen Verbindung und Formaldehyd oder ein Lignosulfonat handelt, zu mindestens einem Epoxidharz und/oder zu mindestens einem anorganischen Füllstoff.

12. Verfahren nach Anspruch 11, wobei das erste Polymer und das zweite Polymer in Form eines Dispergiermittels zugegeben wird, welches durch Herstellen einer wässrigen Lösung, die das erste und das zweite Polymer umfasst, und Sprühtrocknen der wässrigen Lösung unter Erhalt des Dispergiermittels, insbesondere in fester Form, erhältlich ist oder erhalten wurde.

13. Verfahren nach mindestens einem der Ansprüche 11-12, wobei der anorganische Füllstoff mit dem ersten Polymer, dem zweiten Polymer und/oder dem Dispergiermittel beschichtet wird, wobei der anorganische Füllstoff zunächst mit einem Lösungsmittel getränkt und/oder befeuchtet wird und anschließend das erste Polymer, das zweite Polymer und/oder das Dispergiermittel zu dem anorganischen Füllstoff gegeben und/oder mit dem anorganischen Füllstoff gemischt wird bzw. werden.

14. Verwendung eines Dispergiermittels gemäß mindestens einem der vorhergehenden Ansprüche (i) als Dispergiermittel für anorganische Füllstoffe in härtbaren Epoxidharzzusammensetzungen, (ii) zur Verbesserung der Druckfestigkeit, insbesondere der Frühdruckfestigkeit von härtbaren Epoxidharzzusammensetzungen nach 1 Tag und/oder (iii) zur Verbesserung der Biegefestigkeit von härtbaren Epoxidharzzusammensetzungen.

## Revendications

1. Composition de résine époxy durcissable comprenant au moins une résine époxy, au moins une charge inorganique et au moins un dispersant, le dispersant comprenant :
a) au moins un premier polymère, qui est un polymère en peigne possédant un squelette de polymère comprenant des groupes de type acide et des chaînes latérales qui sont liées au squelette de polymère, et
b) au moins un deuxième polymère, qui est un condensat, au moins, d'un composé aromatique et de formaldéhyde ; ou un lignosulfonate.

2. Composition de résine époxy selon la revendication 1, la charge inorganique étant revêtue par le premier polymère, le deuxième polymère et/ou le dispersant.

3. Composition de résine époxy selon au moins l'une des revendications précédentes, le solvant étant un solvant organique polaire, en particulier un ester, un éther et/ou un alcool, notamment de manière préférée, le solvant étant l'alcool benzylique, le carbonate de propylène, le phénoxyéthanol et/ou un éther de glycol, l'alcool benzylique étant en particulier avantageux.

4. Composition de résine époxy selon au moins l'une des revendications précédentes, le polymère en peigne comprenant ou étant constitué des sous-unités structurales suivantes :
a) a fractions molaires d'une sous-unité structurale S1 de la formule (I) 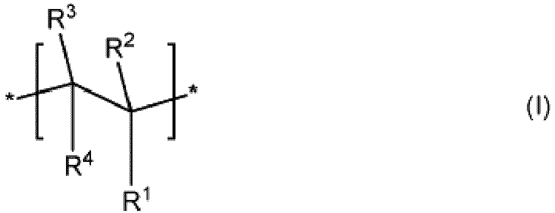
b) b fractions molaires d'une sous-unité structurale S2 de la formule (II) 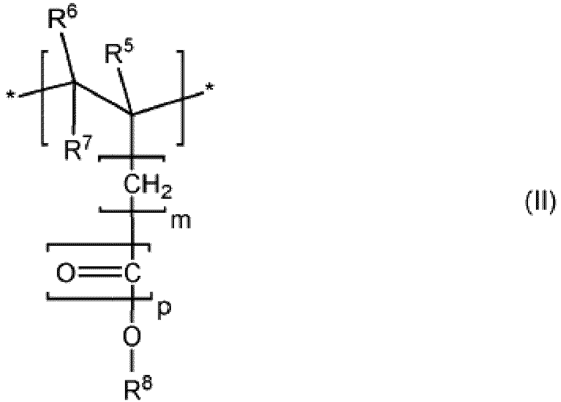
c) éventuellement c fractions molaires d'une sous-unité structurale S3 de la formule (III) 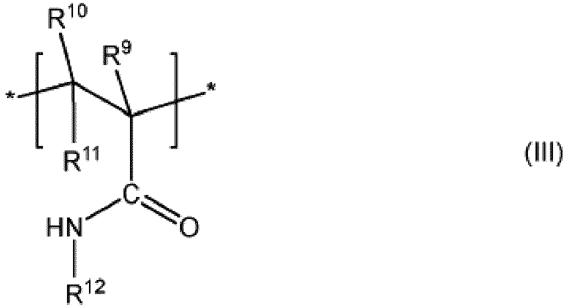
d) éventuellement d fractions molaires d'une sous-unité structurale S4 de la formule (IV) 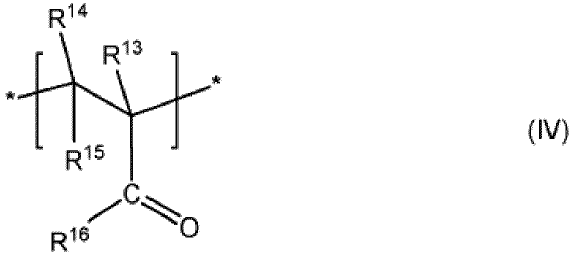 où
R¹, en chaque cas indépendamment de tout autre, est -COOM, -SO₂-OM, -O-PO(OM)₂ et/ou -PO(OM)₂,
R², R³, R⁵, R⁶, R⁹, R¹⁰, R¹³ et R¹⁴, en chaque cas indépendamment les uns des autres, sont H ou un groupe alkyle possédant 1 à 5 atomes de carbone,
R⁴, R⁷, R¹¹ et R¹⁵, en chaque cas indépendamment les uns des autres, étant H, -COOM, ou un groupe alkyle possédant 1 à 5 atomes de carbone,
M, indépendamment de tout autre, est H⁺, un ion de métal alcalin, un ion de métal alcalino-terreux, un ion métallique divalent ou trivalent, un ion ammonium ou un groupe ammonium organique,
m est 0, 1 ou 2,
p est 0 ou 1,
R⁸ et R¹², en chaque cas indépendamment l'un de l'autre, sont un groupe alkyle, cycloalkyle ou alkylaryle en C₁ à C₂₀ ou sont un groupe de la formule -[AO]ₙ-R^{a},
où A est alkylène en C₂ à C₄, R^{a} est H, un groupe alkyle, cyclohexyle ou alkylaryle en C₁ à C₂₀,
et
n est 2 à 250,
R¹⁶, indépendamment de tout autre est NH₂, -NR^{b}R^{c} ou -OR^{d}NR^{e}R^{f}, où R^{b} et R^{c}, indépendamment l'un de l'autre, sont un groupe alkyle, cycloalkyle, alkylaryle ou aryle en C₁ à C₂₀,
ou sont un groupe hydroxyalkyle ou sont un groupe acétoxyéthyle (CH₃-CO-O-CH₂-CH₂-) ou un groupe hydroxyisopropyle (HO-CH(CH₃)-CH₂-) ou un groupe acétoxyisopropyle (CH₃-CO-O-CH(CH₃)-CH₂-) ;
ou R^{b} et R^{c} forment ensemble un cycle dont fait partie l'azote, afin de construire un cycle morpholine ou imidazoline ;
R^{d} est un groupe alkylène en C₂ à C₄,
R^{e} et R^{f} sont chacun indépendamment l'un de l'autre un groupe alkyle, cycloalkyle, alkylaryle ou aryle en C₁ à C₂₀ ou un groupe hydroxyalkyle,
et où a, b, c et d sont des fractions molaires des sous-unités structurales respectives S1, S2, S3, et S4, où a/b/c/d = (0,1 - 0,9) / (0,1 - 0,9) / (0 - 0,8) / (0 - 0,8), plus particulièrement a/b/c/d = (0,3 - 0,7) / (0,2 - 0,7) / (0 - 0,6) / (0 - 0,4), préférablement a/b/c/d = (0,4 - 0,7) / (0,3 - 0,6) / (0,001 - 0,005) / 0, et à la condition que a + b + c + d soit 1.

5. Composition de résine époxy selon au moins l'une des revendications précédentes, le deuxième polymère étant un condensat de sulfonate de mélamine et formaldéhyde, un condensat de sulfonate de naphtalène et formaldéhyde ou un lignosulfonate, notamment un condensat de sulfonate de mélamine-formaldéhyde.

6. Composition de résine époxy selon au moins l'une des revendications précédentes, un rapport en poids du premier polymère sur le deuxième polymère étant compris entre 2 sur 1 et 1 sur 2, plus préférablement entre 1,5 sur 1 et 1 sur 1,5, ou entre 1,2 sur 1 et 1 sur 1,2. Dans un mode de réalisation préféré spécifique, le rapport étant d'environ 1 sur 1.

7. Composition de résine époxy durcissable selon au moins l'une des revendications précédentes, le dispersant étant obtenu en :
a) fournissant le premier polymère,
b) fournissant le deuxième polymère,
c) préparant une solution aqueuse comprenant le premier et le deuxième polymère et
d) séchant par pulvérisation la solution aqueuse pour obtenir le dispersant, notamment sous forme solide.

8. Composition de résine époxy selon au moins l'une des revendications précédentes, comprenant de plus au moins un agent de durcissement et/ou au moins un diluant réactif.

9. Composition de résine époxy selon au moins l'une des revendications précédentes, la composition étant présente en tant que système à plusieurs composants, en particulier un système à trois composants comprenant ou constitué de :
a) un composant de type liant K1 contenant l'au moins une résine époxy, et
b) un composant de durcissement K2 contenant au moins un agent de durcissement, et
c) éventuellement un composant supplémentaire K3, l'au moins une charge inorganique étant contenue dans le composant de type liant K1, le composant de durcissement K2 et/ou dans le composant supplémentaire K3.

10. Résine époxy durcie pouvant être obtenue par durcissement d'une composition de résine époxy selon au moins l'une des revendications 1 à 8 ou par mélange des composants et durcissement d'un système à plusieurs composants selon la revendication 9.

11. Procédé pour la production d'une composition de résine époxy durcissable selon au moins l'une des revendications précédentes, comprenant les étapes d'ajout d'au moins un premier polymère, qui est un polymère en peigne possédant un squelette de polymère comprenant des groupes de type acide et des chaînes latérales qui sont liées au squelette de polymère, et au moins un deuxième polymère, qui est un condensat, au moins, d'un composé aromatique et de formaldéhyde ou un lignosulfonate, à au moins une résine époxy et/ou à au moins une charge inorganique.

12. Procédé selon la revendication 11, le premier polymère et le deuxième polymère étant ajoutés sous la forme d'un dispersant qui peut être obtenu ou est obtenu en préparant une solution aqueuse comprenant le premier et le deuxième polymère et en séchant par pulvérisation la solution aqueuse pour obtenir le dispersant, notamment sous forme solide.

13. Procédé selon au moins l'une des revendications 11 et 12, la charge inorganique étant revêtue avec le premier polymère, le deuxième polymère et/ou le dispersant, la charge inorganique étant d'abord imprégnée et/ou mouillée avec un solvant et subséquemment le premier polymère, le deuxième polymère et/ou le dispersant étant ajouté à et/ou mélangé avec la charge inorganique.

14. Utilisation d'un dispersant tel que défini dans au moins l'une des revendications précédentes (i) en tant qu'agent dispersant pour des charges inorganiques dans des compositions de résine époxy durcissable, (ii) pour l'amélioration de la résistance à la compression, en particulier de la résistance à la compression précoce après 1 jour, de compositions de résine époxy durcissable et/ou (iii) pour l'amélioration de la résistance à la flexion de compositions de résine époxy durcissable.
